(19) Europäisches Patentamt
European Patent Office
Office européen des brevets

(11) **EP 3 774 240 B1**

(12) **EUROPÄISCHE PATENTSCHRIFT**

(45) Veröffentlichungstag und Bekanntmachung des Hinweises auf die Patenterteilung:
**25.10.2023  Patentblatt 2023/43**

(21) Anmeldenummer: **19731166.5**

(22) Anmeldetag: **05.06.2019**

(51) Internationale Patentklassifikation (IPC):
**B27B 9/02** *(2006.01)*     **B23D 59/00** *(2006.01)*

(52) Gemeinsame Patentklassifikation (CPC):
**B27G 19/04; B23D 59/002; B27B** 9/02

(86) Internationale Anmeldenummer:
**PCT/EP2019/064730**

(87) Internationale Veröffentlichungsnummer:
**WO 2019/238511 (19.12.2019 Gazette 2019/51)**

(54) **MOBILE WERKZEUGMASCHINE**

MOBILE MACHINE TOOL

MACHINE-OUTIL MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2018   DE 102018114056**
**03.04.2019   DE 102019108793**

(43) Veröffentlichungstag der Anmeldung:
**17.02.2021   Patentblatt 2021/07**

(73) Patentinhaber: **Festool GmbH**
**73240 Wendlingen am Neckar (DE)**

(72) Erfinder:
• **KÜBELER, Matthias**
**73230 Kirchheim unter Teck (DE)**
• **RUSCH, Marc**
**73728 Esslingen (DE)**
• **SCHÄUBLE, Daniel**
**79410 Badenweiler (DE)**

(74) Vertreter: **Patentanwälte Bregenzer und Reule Partnerschaftsgesellschaft mbB**
**Neckarstraße 47**
**73728 Esslingen (DE)**

(56) Entgegenhaltungen:
EP-A2- 0 588 057     DE-A1-102006 052 808
DE-A1-102007 062 261     DE-A1-102008 055 058
DE-A1-102009 029 104     DE-A1-102011 116 873
DE-A1-102012 219 397     DE-A1-102013 217 290
DE-A1-102015 221 631     DE-A1-102015 225 392
DE-A1-102016 216 782

**Beschreibung**

Die Erfindung betrifft eine mobile Werkzeugmaschine, nämlich eine Hand-Werkzeugmaschine oder halbstationäre Werkzeugmaschine, gemäß dem Oberbegriff des Anspruchs 1.

Die Erfindung betrifft ferner ein Verfahren zum Betreiben einer mobilen Werkzeugmaschine, nämlich einer Hand-Werkzeugmaschine oder halbstationären Werkzeugmaschine, zur Bearbeitung eines Werkstücks, wobei die Werkzeugmaschine ein Führungselement mit einer Führungsfläche zum relativen Führen der Werkzeugmaschine und einer Werkstückoberfläche des Werkstück aneinander entlang einer Bearbeitungsbahn, insbesondere einer Bearbeitungslinie, aufweist, wobei die Werkzeugmaschine eine Antriebseinheit mit einem Antriebsmotor zum Antreiben einer an der Antriebseinheit angeordneten Werkzeugaufnahme zur Aufnahme eines Arbeitswerkzeugs aufweist, wobei die Werkzeugmaschine eine Erfassungseinrichtung zur Erfassung mindestens einer Werkstückreferenz aufweist, die bezüglich der Bearbeitungsbahn einem für einen Beginn der Bearbeitung des Werkstücks durch das Arbeitswerkzeug vorgesehenen Bearbeitungbeginnort oder einem für eine Beendigung der Bearbeitung des Werkstücks durch das Arbeitswerkzeug vorgesehenen Bearbeitungsendeort zugeordnet ist, wobei die Werkzeugaufnahme zum Drehantreiben des Arbeitswerkzeugs um eine Drehachse ausgestaltet ist und zur Einstellung einer Eindringtiefe des Arbeitswerkzeugs in das Werkstück anhand einer Tiefeneinstelleinrichtung der Werkzeugmaschine zwischen Tiefeneinstellpositionen verstellbar ist, wobei das Arbeitswerkzeug an seinem radialen Außenumfang einen Schneidbereich zum Einschneiden in das Werkstück unter Ausbildung einer Bearbeitungskante aufweist, die in Abhängigkeit von mindestens zwei Tiefeneinstellpositionen, bei denen das Arbeitswerkzeug unterschiedlich weit vor die Führungsfläche vorsteht, unterschiedliche Abstände zu der mindestens einen Werkstückreferenz aufweist.

Eine derartige Werkzeugmaschine und ein derartiges Verfahren ist beispielsweise in DE 10 2013 217290 A1 erläutert.

Eine weitere Werkzeugmaschine ist beispielsweise in DE 10 2017 129 814 beschrieben. Anhand der Werkstückreferenz kann der Bediener beispielsweise einen Sägeschnitt in das Werkstück einbringen.

Insbesondere bei der Verwendung von Tauchsägen ist es schwierig, dass ein Bediener den Bearbeitungbeginnort oder den Bearbeitungsendeort oder beide auf findet, beispielsweise um einen Sägeschnitt in eine Arbeitsplatte einzubringen. Der Bediener positioniert sozusagen mit Augenmaß die Tauchsäge derart, dass der Sägeschnitt in das Werkstück hinein am Bearbeitungbeginnort tatsächlich beginnt. Die Handhabung ist schwierig. Die gleiche Problematik ergibt sich auch bei halbstationären Sägen, bei denen das Werkstück an einem Führungstisch, also beispielsweise einer Auflagefläche, relativ zum Arbeitswerkzeugs, beispielsweise einem Sägeblatt, bewegt wird. Auch hier ist es nicht ohne weiteres möglich, Bearbeitungbeginnort oder den Bearbeitungsendeort exakt aufzufinden.

Es ist daher die Aufgabe der vorliegenden Erfindung, eine verbesserte Werkzeugmaschine bereitzustellen.

Zur Lösung der Aufgabe ist eine Werkzeugmaschine gemäß der technischen Lehre des Anspruchs 1 vorgesehen.

Ein Verfahren der eingangs genannten Art sieht eine Ermittlung eines Abstandswerts des Abstands der Bearbeitungskante zu der mindestens einen Werkstückreferenz und Ermittlung eines Tiefenvorgabewerts für die Tiefeneinstellposition in Abhängigkeit von dem Abstandswert vor.

Anhand des Tiefenvorgabewerts ist eine Tiefeneinstellposition einfach einstellbar, beispielsweise manuell und/oder motorisch. Auch eine Bremsung beispielsweise der Antriebseinheit in Tiefeneinstellposition, die dem Tiefenvorgabewert zugeordnet ist, ist ohne weiteres realisierbar. Dabei wird berücksichtigt, wie weit die ermittelte Bearbeitungskante von dem Bearbeitungbeginnort oder den Bearbeitungsendeort entfernt ist.

Bevorzugt betrifft der Abstandswert oder der Abstands der Bearbeitungskante zu der Werkstückreferenz einen auf die Werkstückoberfläche bezogenen Abstand.

An dem Bearbeitungbeginnort und/oder den Bearbeitungsendeort kann die Referenzmarkierung unmittelbar angebracht sein. Die Referenzmarkierung kann unmittelbar an der Werkstückoberfläche angeordnet oder angebracht sein.

Bei der Referenzmarkierung handelt es sich vorzugsweise um eine optische Markierung. Beispielsweise kann die Referenzmarkierung einen Strich oder eine Strichmarkierung umfassen, die an dem Werkstück angebracht ist. Die Referenzmarkierung kann aber auch abseits des Werkstücks vorgesehen sein, beispielsweise durch eine Wandfläche oder Seitenfläche neben dem Werkstück gebildet sein. Weiterhin ist es möglich, dass die Referenzmarkierung beispielsweise an einer Führungsschiene angeordnet ist, die zur Führung der Werkzeugmaschine entlang der Bearbeitungsbahn vorgesehen und ausgestaltet ist und die auf der Werkstückoberfläche auflegbar ist.

Vorteilhaft ist es, wenn die mindestens eine Werkstückreferenz, die durch die Erfassungseinrichtung erfassbar ist, sowohl einem Bearbeitungbeginnort als auch eine Bearbeitungsendeort zugeordnete Referenzmarkierungen umfasst. Somit ist es möglich, beispielsweise einen Sägeschnitt oder Trennschnitt vom Bearbeitungbeginnort bis zum Bearbeitungsendeort entlang der Bearbeitungsbahn durchzuführen. Es ist aber auch möglich, dass nur eine Referenzmarkierung, beispielsweise eine dem Bearbeitungbeginnort zugeordnete oder eine den Bearbeitungsendeort zugeordnete Referenzmarkierung vorhanden ist. Somit ist beispielsweise ein von einer freien Seite eingebrachter Sägeschnitt am Bearbeitungsendeort zuverlässig beendbar. Ferner kann ein Sägeschnitt an der Werkstückoberfläche am Bearbeitungbeginnort beginnen, also mit einem Eintauchen des Arbeitswerkzeugs in die Werkstückoberfläche, und an einer beliebigen Stelle des Werkstücks enden, beispielsweise an einem freien Endbereich des Werkstücks ausmünden oder auch noch an der Werkstückoberfläche, entlang derer die Bearbeitungsbahn verläuft, beendet werden, also in einem Abstand von einem freien Endbereich.

Die Werkzeugaufnahme weist in den Tiefeneinstellpositionen unterschiedliche Abstände zu der Führungsfläche auf. Demensprechend weist auch das Arbeitswerkzeug in den Tiefeneinstellpositionen unterschiedliche Abstände der Führungsfläche auf.

Bevorzugt ist die Führungsfläche des Führungselements eine Planfläche.

Das Führungselement ist vorzugsweise plattenförmig oder weist eine Führungsplatte auf. Das Führungselement kann auch durch eine Führungsplatte gebildet sein. Beispielsweise handelt es sich bei dem Führungselement um einen sogenannten Sägetisch. Das Führungselement kann aber auch eine Auflagefläche zum Auflegen des Werkstücks sein.

Bevorzugt ist es, wenn die Drehachse der Werkzeugaufnahme und/oder des Arbeitswerkzeugs orthogonal zu einer Normalenrichtung der Führungsfläche verläuft. Weiterhin ist es vorteilhaft, wenn die Drehachse quer zu einer Regelarbeitsrichtung verläuft, auf die noch eingegangen wird.

Ein bevorzugtes Konzept sieht vor, dass die Tiefenvorgabeeinrichtung zur kontinuierlichen Ermittlung des Tiefenvorgabewerts in Abhängigkeit von einer Relativbewegung der Werkzeugmaschine und des Werkstücks bezüglich der Bearbeitungsbahn ausgestaltet ist. Die Relativbewegung von Werkstück und Werkzeugmaschine kann beispielsweise eine zu der Bearbeitungsbahn hin gerichtete Bewegung und/oder Bewegung entlang der Bearbeitungsbahn sein. Die Tiefenvorgabeeinrichtung erzeugt bei einer Relativbewegung von Werkzeugmaschine und Werkstück, also zum Beispiel der Hand-Werkzeugmaschine entlang des Werkstücks, und/oder in Abhängigkeit von einer Relativbewegung von Werkzeugmaschine und Werkstück insbesondere kontinuierlich Tiefenvorgabewerte. Die Tiefenvorgabeeinrichtung ermittelt also den einer Relativposition von Werkzeugmaschine und Werkstück bezüglich der Bearbeitungsbahn oder Regelarbeitsrichtung jeweils zugeordneten Tiefenvorgabewert. Somit ist beispielsweise ein Eintauchort des Arbeitswerkzeugs in die Werkstückoberfläche, nämlich der Bearbeitungbeginnort, leicht aufzufinden. Der Bediener führt die Hand-Werkzeugmaschine am Werkstück entlang, bis der Bearbeitungbeginnort erreicht ist und die Tiefenvorgabeeinrichtung mindestens einen ein Eintauchen in das Werkstück indizierenden Tiefenvorgabewert erzeugt. Ebenso leicht ist ein Austauchen des Arbeitswerkzeugs aus dem Werkstück zu realisieren, indem nämlich die Tiefenvorgabeeinrichtung einen ein Austauchen des Arbeitswerkzeugs aus dem Werkstück indizierenden Tiefenvorgabewert bei Erreichen der in Arbeitsrichtung oder Regelarbeitsrichtung vorderen Bearbeitungskante erzeugt. Zwischen dem Bearbeitungbeginnort und dem Erreichen der in Regelarbeitsrichtung vorderen Bearbeitungskante kann die Tiefenvorgabeeinrichtung beispielsweise einen konstanten Tiefenvorgabewert ermitteln, d. h. dass das Arbeitswerkzeug, insbesondere Sägeblatt, bis zu einer vorbestimmten maximalen Tiefe in das Werkstück eintaucht. Wenn die Werkzeugmaschine relativ zum Werkstück, beispielsweise während eines Sägevorgangs, ortsfest steht, also beispielsweise nicht vorwärts oder rückwärts bewegt wird, kann der Tiefenvorgabewert beispielsweise gleich bleiben. Wenn also das Arbeitswerkzeug beispielsweise am Bearbeitungbeginnort in das Werkstück einschneidet, jedoch noch nicht die maximale Eindringtiefe in das Werkstück erreichen darf, damit das Werkstück nicht in Regelarbeitsrichtung hinter dem Bearbeitungbeginnort in das Werkstück eingreift oder einschneidet, wenn die Werkzeugmaschine nicht weiter in Regelarbeitsrichtung nach vorn bezüglich des Werkstücks bewegt wird, sondern bezüglich des Werkstücks ortsfest ist, ändert die Tiefenvorgabeeinrichtung den Tiefenvorgabewert nicht.

Bevorzugt ist es, wenn die Werkzeugmaschine zum Führen des Arbeitswerkzeugs entlang der Bearbeitungsbahn in einer Regelarbeitsrichtung vorgesehen ist. Beispielsweise sind Zähne oder sonstige an dem Schneidbereich vorgesehene Schneideinrichtungen des Arbeitswerkzeugs durch die Antriebseinheit derart antreibbar, dass sie in Regelarbeitsrichtung vorn von einer von Werkstückoberfläche abgewandten Rückseite her in das Werkstück eindringen.

Bevorzugt ist vorgesehen, dass die Tiefenvorgabeeinrichtung bei einer Bewegung in der Regelarbeitsrichtung zur Ausgabe eines ein Eintauchen des Arbeitswerkzeugs in das Werkstück indizierenden Tiefenvorgabewerts, wenn die in Regelarbeitsrichtung hintere Bearbeitungskante den Bearbeitungbeginnort erreicht, und/oder zur Ausgabe eines ein Austauchen des Arbeitswerkzeugs aus dem Werkstück indizierenden Tiefenvorgabewerts ausgestaltet ist, wenn die in Regelarbeitsrichtung vordere Bearbeitungskante den Bearbeitungsendeort erreicht. Zwischen dem Bearbeitungbeginnort und dem Bearbeitungsendeort gibt die Tiefenvorgabeeinrichtung beispielsweise nur einen Tiefenvorgabewert aus, der einer konstanten Tiefeneinstellposition zugeordnet ist. Somit kann ein gleichmäßiger Sägeschnitt oder sonstiger bearbeitender Vorgang entlang der Bearbeitungsbahn zwischen dem Bearbeitungbeginnort und dem Bearbeitungsendeort vorgenommen werden.

Es ist durchaus möglich oder denkbar, dass die Werkzeugmaschine und das Werkstück entgegen der Regelarbeitsrichtung relativ zueinander betätigt werden, d. h. beispielsweise die Werkzeugmaschine rückwärts entgegen der Regelarbeitsrichtung bewegt wird, was aber in manchen Fällen zu unerwünschten Rückstoßreaktionen, sogenannten Kick-Back-Reaktionen, führen kann. Weiterhin kann dabei auch das Werkstück über den an sich vorgesehenen Bearbeitungbeginnort hinaus durch das Arbeitswerkzeug bearbeitet werden. So kann beispielsweise ein Sägeschnitt über seinen eigentlich gewünschten Anfang hinaus hergestellt werden, was in der Praxis zumindest unerwünscht ist. Dagegen hilft die nachfolgend erläuterte Maßnahme:

Vorzugsweise ist bei der Werkzeugmaschine vorgesehen, die Tiefenvorgabeeinrichtung zur Ausgabe eines ein Austauchen des Arbeitswerkzeugs aus dem Werkstück indizierenden Tiefenvorgabewerts ausgestaltet ist, wenn das Arbeitswerkzeugs entgegen der Regelarbeitsrichtung um ein vorbestimmtes Maß bewegt wird und/oder wenn die in Regelarbeitsrichtung hintere Bearbeitungskante den Bearbeitungbeginnort erreicht.

Das Arbeitswerkzeug und/oder die Werkzeugaufnahme durchlaufen bei einer Verstellung zwischen den Tiefeneinstellpositionen, beispielsweise einer oberen Tiefeneinstellposition, bei der das Arbeitswerkzeug nicht vor die Führungsfläche vorsteht, und einer oder mehreren unteren Tiefeneinstellpositionen, bei denen das Arbeitswerkzeug insbesondere unterschiedlich weit vor die Führungsfläche vorsteht, eine Bewegungsbahn mit einer Richtungskomponente parallel zur Führungsfläche und einer Richtungskomponente senkrecht zur Führungsfläche. Eine konstante Vorschubbewegung entlang der Regelarbeitsrichtung oder entgegen derselben ist jedoch nicht notwendig. Wenn also beispielsweise der Bediener die Werkzeugmaschine nicht mit einer Bewegungskomponente entlang der Regelarbeitsrichtung vorwärts oder rückwärts bewegt, bleibt das Arbeitswerkzeug oder die Werkzeugaufnahme beispielsweise in derselben Tiefeneinstellposition stehen und/oder ermittelt die Tiefenvorgabeeinrichtung denselben Tiefenvorgabewert.

Beispielsweise schwenkt das Arbeitswerkzeug oder ein Mittelpunkt des Arbeitswerkzeugs, die Werkzeugaufnahme oder dergleichen um eine Tiefeneinstellachse, um die die Werkzeugaufnahme und das Arbeitswerkzeug, wenn es daran angeordnet ist, relativ zur Führungsfläche schwenken. Die Tiefeneinstellachse weist beispielsweise einen Abstand zu einer Drehachse der Werkzeugaufnahme oder des Arbeitswerkzeuges auf.

An dieser Stelle ist aber zu bemerken, dass grundsätzlich auch eine lineare Verstellung zwischen den Tiefeneinstellpositionen möglich wäre, d. h. dass beispielsweise das Arbeitswerkzeug und die Werkzeugaufnahme nur eine Bewegungsbahn mit einer Richtungskomponente senkrecht zur Führungsfläche durchlaufen, beispielsweise im Falle einer Linearführung der Werkzeugaufnahme relativ zur Führungsfläche.

Durch die Richtungskomponente parallel zur Führungsfläche bewegen sich die vordere und hintere Bearbeitungskante ebenfalls parallel zur Führungsfläche, beispielsweise nach vorn, wenn das Arbeitswerkzeug oder die Werkzeugaufnahme vor die Führungsfläche vorgeschwenkt werden. Bevorzugt ist bei dieser Ausgestaltung, dass die Tiefenvorgabeeinrichtung zur Ermittlung des Tiefenvorgabewerts in Abhängigkeit von einer Verstellung der vorderen Bearbeitungskante und/oder der hinteren Bearbeitungskante abhängig von der Richtungskomponente parallel zu der Führungsfläche ausgestaltet ist. Wenn also beispielsweise die Führungsfläche und somit die Werkzeugaufnahme und das Arbeitswerkzeug mit der vorderen Bearbeitungskante und der hinteren Bearbeitungskante entlang der Bearbeitungsbahn in einer Regelarbeitsrichtung nach vorn oder entgegen dieser Regelarbeitsrichtung nach hinten bewegt werden und zusätzlich noch eine Tiefeneinstellung vorgenommen wird, ermittelt die Tiefenvorgabeeinrichtung, beispielsweise anhand eines Wegesensors, eine Bewegungskomponente der vorderen Bearbeitungskante und/oder der hinteren Bearbeitungskante parallel zur Führungsfläche, die sich durch den Vorschub der Führungsfläche in Regelarbeitsrichtung oder entgegen der Regelarbeitsrichtung ergibt und zudem eine sich durch die Verstellung zwischen den Tiefeneinstellpositionen ergebende Bewegungskomponente der vorderen und/oder hinteren Bearbeitungskante parallel zu der Führungsfläche.

Des Weiteren ergibt sich beispielsweise bei einem Sägeblatt die Problematik, dass die Position der vorderen und hinteren Bearbeitungskante von der Eindringtiefe des Arbeitswerkzeuges in das Werkstück abhängt. Wenn also ein Abstand zwischen der vorderen Bearbeitungskante und der hinteren Bearbeitungskante von einer Eindringtiefe des Arbeitswerkzeugs in das Werkstück abhängig ist, was vorgesehen sein kann, ist bei der Tiefenvorgabeeinrichtung vorteilhaft vorgesehen, dass sie zur Ermittlung des Tiefenvorgabewerts in Abhängigkeit von einer Verstellung der vorderen Bearbeitungskante und der hinteren Bearbeitungskante in Abhängigkeit von der Eindringtiefe des Arbeitswerkzeugs ausgestaltet ist. Beispielsweise ermittelt die Tiefenvorgabeeinrichtung. Wenn das Arbeitswerkzeug beispielsweise tiefer in das Werkstück eindringt, bewegt sich die vordere Bearbeitungskante sozusagen in Regelarbeitsrichtung nach vorn und die hintere Bearbeitungskante entgegen der Regelarbeitsrichtung nach hinten.

Ein bevorzugtes Konzept sieht vor, dass die Werkzeugmaschine einen Wegesensor zur Ermittlung einer Weglänge einer Relativbewegung der Werkzeugmaschine und des Werkstücks, insbesondere entlang der Bearbeitungsbahn oder zu der Bearbeitungsbahn hin, aufweist. Die Bewegung zu der Bearbeitungsbahn hin kann beispielsweise in der Regelarbeitsrichtung oder entgegen der Regelarbeitsrichtung orientiert sein. Durch die Bewegung zu der Bearbeitungsbahn hin wird beispielsweise das Arbeitswerkzeugs zu dem Bearbeitungbeginnort oder zu dem Bearbeitungsendeort bewegt.

Die mindestens eine Werkstückreferenz kann beispielsweise eine körperliche oder optische Werkstückreferenz oder ein Referenzmerkmal des Werkstücks sein. Die mindestens eine Werkstückreferenz kann sozusagen eine natürliche Referenz sein, die an dem Werkstück angeordnet ist, beispielsweise eine Kante des Werkstücks, eine optische Struktur an dem Werkstück, zum Beispiel ein Muster oder dergleichen. Weiterhin kann die mindestens eine Werkstückreferenz auch eine individuell als Referenzmarkierung angebrachte Werkstückreferenz sein, beispielsweise ein Strich oder dergleichen. Die Werkstückreferenz kann auch eine temporäre oder virtuelle Werkstückreferenz sein, beispielsweise ein Ort des Werkstücks, welcher als Werkstückreferenz identifiziert wird. Eine optisch erfassbare Werkstückreferenz kann eine im sichtbaren Spektrum liegende Referenz sein, d. h. eine Referenz sein, die ein Bediener sehen kann.

Es ist aber auch möglich, dass die optisch erfassbare Werkstückreferenz anhand eines Markierungsmediums hergestellt ist, das für das menschliche Auge nicht sichtbar ist. Die Werkstückreferenz kann z.B. anhand eines transparenten und/oder lumineszierenden Markierungsmediums gebildet sein, welches zwar für das menschliche Auge nicht sichtbar ist, jedoch durch Sensoren der Werkzeugmaschine, zum Beispiel den nachfolgend erläuterten Markierungssensor oder den Wegesensor, erfassbar ist. Der Sensor kann beispielsweise für das Markierungsmedium ohne weitere Maßnahme sensibel sein, beispielsweise Licht in nicht sichtbarem Bereich erfassen können. Es ist auch möglich, dass Markierungsmedium durch von außen zugeführte Energie, z.B. eine Beleuchtung, beispielsweise mittels ultraviolettem Licht, aktivierbar oder in einen angeregten Zustand bringbar ist, sodass es durch den jeweiligen Sensor erfassbar ist. In diesem Fall weist die Werkzeugmaschine oder der Sensor der Werkzeugmaschine vorteilhaft eine entsprechende Energiequelle oder Lichtquelle auf, um das Markierungsmedium zu aktivieren, beispielsweise eine Lichtquelle zur Emission von UV-Licht.

Sozusagen körperliche oder optische Werkstückreferenzen können durch den nachfolgend erläuterten Markierungssensor, insbesondere einen optischen Sensor, eine Kamera oder dergleichen, erfassbar sein.

Eine virtuelle Werkstückreferenz ist jedoch am Werkstück nicht als erkennbare Markierung vorhanden, sondern wird beispielsweise durch eine Bedienhandlung eines Bedieners im Zusammenhang mit einer geeigneten Erfassungseinrichtung ermittelt und/oder definiert. Dazu eignet sich beispielsweise der noch erläuterte Markierungssensor.

Die Erfassungseinrichtung kann eine durch einen Bediener zur Erfassung der mindestens einen Werkstückreferenz betätigbare Betätigungseinrichtung umfassen. Der Bediener betätigt beispielsweise eine Taste als Betätigungseinrichtung, wenn er die Werkstückreferenz erfassen möchte. Dabei wird beispielsweise eine Referenzmarkierung an dem Führungselement an einer Stelle der Bearbeitungsbahn positioniert, die dem Bearbeitungbeginnort oder dem Bearbeitungsendeort entspricht. Sodann betätigt der Bediener die Betätigungseinrichtung, sodass die Erfassungseinrichtung auf diesem Wege die mindestens eine Werkstückreferenz erfassen kann.

Bevorzugt ist ein im Wesentlichen automatisches oder automatisiertes Konzept:

Bei der Werkzeugmaschine ist vorzugsweise vorgesehen, dass die Erfassungseinrichtung einen Markierungssensor mit einem beim Betrieb der Werkzeugmaschine auf das Werkstück gerichteten Werkstück-Erfassungsbereich zur Ermittlung der mindestens einen Werkstückreferenz aufweist, wenn die Werkstückreferenz an dem Werkstück angebracht oder angeordnet ist oder dem Werkstück zugeordnet ist. Die Werkstückreferenz wird also beispielsweise durch einen Strich oder eine sonstige optische Markierung direkt am Werkstück gebildet, die anhand des Markierungssensors erfassbar ist. Ohne weiteres können dem Bearbeitungbeginnort und dem Bearbeitungsendeort zugeordnete Markierungen auf dem oder an dem Werkstück durch den Markierungssensor erfasst werden.

Eine als am Werkstück angebrachte oder angeordnete Werkstückreferenz beschriebene Werkstückreferenz kann also eine körperliche, optische oder dergleichen andere Werkstückreferenz, also ein optisch erkennbares Referenzmerkmal des Werkstücks sein, aber auch eine virtuelle Werkstückreferenz. Eine am Werkstück angeordnete Werkstückreferenz ist also in der obigen Ausgestaltung der Erfindung sowie auch bei der nachfolgend erläuterten Maßnahme auch als eine solche Werkstückreferenz zu verstehen, die dem Werkstück sozusagen zugeordnet ist, d. h. dass der Bediener beispielsweise die Werkstückreferenz durch eine Bedienhandlung definiert, jedoch keine optische oder dergleichen andere sichtbare oder körperliche Markierung als Werkstückreferenz am Werkstück vorhanden ist. Eine bevorzugte Weiterbildung der bislang beschriebenen Werkzeugmaschine stellt die nachfolgende vorteilhafte Maßnahme oder Ausgestaltung dar:

Bei einer Werkzeugmaschine als vorteilhafte Ausgestaltung der bisher beschriebenen Werkzeugmaschine ist vorgesehen, dass sie mindestens einen Markierungssensor mit einem beim Betrieb der Werkzeugmaschine auf das Werkstück gerichteten Werkstück-Erfassungsbereich zur Ermittlung der mindestens einen Werkstückreferenz aufweist, wenn die Werkstückreferenz an dem Werkstück angebracht oder angeordnet ist oder dem Werkstück zugeordnet ist, und mindestens einen von der Markierungssensor separaten Wegesensor zur Ermittlung einer Weglänge einer Relativbewegung der Werkzeugmaschine und des Werkstücks, insbesondere entlang der Bearbeitungsbahn, nach der Ermittlung der mindestens einen Werkstückreferenz aufweist.

Es ist möglich, dass das der Markierungssensor Werkstückreferenzen ermitteln kann, die bezüglich der Bearbeitungsbahn einem für einen Beginn der Bearbeitung des Werkstücks durch das Arbeitswerkzeug vorgesehenen Bearbeitungbeginnort oder einem für eine Beendigung der Bearbeitung des Werkstücks durch das Arbeitswerkzeug vorgesehenen Bearbeitungsendeort zugeordnet sind.

Bei diesem an sich eigenständigen Gedanken kommt zum Ausdruck, dass die Werkstückreferenz, die am Werkstück angebracht ist, beispielsweise als optische Markierung, Strich oder dergleichen, vom Markierungssensor erfasst wird, dann aber bei einer Relativbewegung von Werkstück und Werkzeugmaschine aus dem Erfassungsbereich des Markierungssensors gelangen kann. Anhand des Wegesensors kann die Werkzeugmaschine dennoch ermitteln, welchen Abstand beispielsweise das Arbeitswerkzeug von der Referenzmarkierung aufweist, um auf diesem Wege beispielsweise einen Sägeschnitt oder eine sonstige Bearbeitung des Werkstücks durch das Arbeitswerkzeug zu beginnen oder zu beenden.

Der Markierungssensor kann an Bord der Werkzeugmaschine, beispielsweise an deren Gehäuse, der Antriebseinheit, dem Führungselement oder dergleichen angeordnet sein. Es ist aber auch möglich, dass der Markierungssensor ein von der Werkzeugmaschine separates und unabhängiges Sensorgerät ist. Mithin ist es also möglich, der Markierungssensor oder das Sensorgerät einerseits und andererseits die Antriebseinheit und das Führungselement voneinander separate und nicht miteinander verbundene Baugruppen bilden. Der Markierungssensor oder das Sensorgerät kann z.B. an einer zu referenzierenden Stelle des Werkstücks positioniert werden, beispielsweise einem Ort, an dem ansonsten eine optische Markierung, ein Strich oder dergleichen an dem Werkstück angebracht wäre oder werden würde. Das Sensorgerät oder der Markierungssensor erfasst Koordinaten dieses Ortes und meldet diese Koordinaten, insbesondere drahtlos, zum Beispiel über Funk, optisch oder dergleichen, als Werkstückreferenz an die Werkzeugmaschine, beispielsweise deren Tiefeneinstelleinrichtung.

Der an sich eigenständige Gedanke kann ohne weiteres auch bei Werkzeugmaschinen zum Einsatz kommen, die beispielsweise keinen Drehantrieb für die Werkzeugaufnahme aufweisen, sondern einen Oszillationsantrieb. Weiterhin ist es möglich, dass beispielsweise Oberfräsen oder dergleichen den Gedanken realisieren.

Gleichwohl ist es vorteilhaft, wenn bei der Werkzeugmaschine mit Wegesensor und Markierungssensor die Werkzeugaufnahme zum Drehantreiben des Arbeitswerkzeugs um eine Drehachse ausgestaltet ist und zur Einstellung einer Eindringtiefe des Arbeitswerkzeugs in das Werkstück anhand einer Tiefeneinstelleinrichtung der Werkzeugmaschine zwischen Tiefeneinstellpositionen verstellbar ist.

Ferner ist bei dieser Werkzeugmaschine vorteilhaft, wenn das Arbeitswerkzeug an seinem radialen Außenumfang einen Schneidbereich zum Einschneiden in das Werkstück unter Ausbildung einer Bearbeitungskante aufweist, die in Abhängigkeit von mindestens zwei Tiefeneinstellpositionen, bei denen das Arbeitswerkzeug unterschiedlich weit vor die Führungsfläche vorsteht, unterschiedliche Abstände zu der mindestens einen Werkstückreferenz aufweist. Die bereits beschriebene Tiefenvorgabeeinrichtung kann, muss aber nicht vorhanden sein.

Ein vorteilhaftes Verfahren sieht vor, dass der Markierungssensor zunächst über eine oder mehrere Werkstückreferenzen hinweg oder zu den Werkstückreferenzen hin bewegt wird, um deren Position zu erfassen. Anschließend erfasst der Wegesensor eine Relativbewegung der Werkzeugmaschine relativ zu den jeweils erfassten Werkstückreferenzen. Beispielsweise sind die Werkstückreferenzen einem Bearbeitungbeginnort und einem Bearbeitungsendeort für eine Bearbeitung des Werkstücks durch das Arbeitswerkzeug zugeordnet.

Zweckmäßigerweise ist vorgesehen, dass der Markierungssensor und der Wegesensor unterschiedliche physikalische Erfassungskonzepte aufweisen. Beispielsweise handelt es sich bei dem Markierungssensor um eine Kamera oder einen sonstigen Sensor, mit dem eine dediziert am Werkstück angebrachte optische Markierung oder Werkstückreferenz erfassbar ist. Bei dem Wegesensor ist lediglich die Erfassung einer Wegstrecke notwendig, die der Wegesensor beispielsweise anhand einer optischen Veränderung einer Oberflächenstruktur der Werkstückoberfläche bei einer Relativbewegung von Werkstück und Führungsfläche aneinander ermittelt.

Es kann vorgesehen sein, dass der Wegesensor nicht zur Erfassung der Referenzmarkierung ausgestaltet ist, beispielsweise eine Referenzmarkierung, zum Beispiel einen Strich oder dergleichen, am Werkstück nicht erkennen kann.

Bei Markierungssensor hingegen ist es vorteilhaft, wenn er nicht zur Erfassung einer Wegstrecke ausgestaltet ist, sondern dediziert zur Erfassung der am Werkstück angeordneten Referenzmarkierung.

Bevorzugt ist vorgesehen, dass der Wegesensor außerhalb des Erfassungsbereichs des Markierungssensors an der Werkzeugmaschine, insbesondere dem Führungselement, und/oder in einem Querabstand zu der Bearbeitungskante angeordnet ist. Der Wegesensor kann also abseits des Erfassungsbereichs des Markierungssensors angeordnet sein, sodass er den Erfassungsbereich nicht stört.

Es ist aber auch möglich, dass ein Sensor vorgesehen ist, der die Funktionen des Wegesensors und des Markierungssensors bereitstellt. Der Sensor ist z.B. zwischen einem Erfassungsmodus zur Erfassung der Werkstückreferenz und, insbesondere daran anschließend, einem Erfassungsmodus zur Erfassung eines Abstands zu der Werkstückreferenz schaltbar oder in diesen Erfassungsmodi gleichzeitig oder sequenziell betreibbar. Z.B. kann anhand eines optischen Sensors zunächst der Ort die Werkstückreferenz erfassbar sein und der anschließend der jeweilige Abstand zu der Werkstückreferenz bei einer örtlichen Verstellung der Werkzeugmaschine ermittelbar sein.

Bei einem Wegesensor sind verschiedene Ausgestaltungen möglich. Beispielsweise ist vorgesehen, dass der Wegesensor mindestens ein Rollglied zum Rollen entlang einer Oberfläche des Werkstücks und/oder mindestens ein optisches Erfassungselement, insbesondere in der Art eines Maussensors, und/oder mindestens einen Lagesensor und/oder mindestens einen magnetischen Sensor zur Erfassung eines Erdmagnetfeldes und/oder mindestens ein Beschleunigungssensor umfasst oder dadurch gebildet ist. Ohne weiteres können mehrere Wegesensoren, die nach unterschiedlichen physikalischen Messprinzipien arbeiten, vorgesehen sein.

Beim Wegesensor und/oder Markierungssensor kann vorteilhaft vorgesehen sein, dass er der Wegesensor und/oder der Markierungssensor eine Kamera und/oder einen optischen Sensor und/oder einen induktiven Sensor umfasst oder dadurch gebildet ist. Des Weiteren kann der Markierungssensor auch beispielsweise ein Sensor sein, mit dem eine virtuelle Werkstückreferenz des Werkstücks erfassbar ist, insbesondere im Zusammenhang mit einer Bedienhandlung eines Bedieners. Der Sensor ermittelt bei einer Bedienhandlung eines Bedieners einen jeweiligen Ort einer virtuellen Werkstückreferenz, beispielsweise als Bearbeitungbeginnort und/oder als Bearbeitungsendeort.

Es ist möglich, dass die Führungsfläche und die Werkstückoberfläche beim Betrieb der Werkzeugmaschine bzw. bei der Bearbeitung des Werkstücks unmittelbar aneinander anliegen. Es ist aber auch möglich, dass sie einen Abstand zueinander aufweisen.

Vorteilhaft ist vorgesehen, dass die Tiefenvorgabeeinrichtung zur Ermittlung des Tiefenvorgabewerts in Abhängigkeit von einem Abstand der Führungsfläche zu der Werkstückoberfläche ausgestaltet ist. Der Abstand kann beispielsweise dadurch entstehen, dass ein Bediener die Führungsfläche bewusst nicht auf die Werkstückoberfläche auflegt. Er kann aber auch durch eine Führungsschiene oder ein sonstiges von der Werkzeugmaschine separates Führungselement bedingt sein.

Bevorzugt ist vorgesehen, dass die Tiefenvorgabeeinrichtung mindestens ein Erfassungselement zur Erfassung eines Anfangsabstandes zwischen der Führungsfläche und der Werkstückoberfläche aufweist. Der Anfangsabstand kann prinzipiell ein freier Abstand zwischen dem Werkstück und der Führungsfläche sein. Es ist aber auch vorteilhaft, wenn die Tiefenvorgabeeinrichtung ein Erfassungselement zur Erfassung eines Vorhandenseins einer Führungsschiene aufweist, wobei die Führungsschiene auf die Werkstückoberfläche auflegbar ist und das Führungselement auf der Führungsschiene entlang der Bearbeitungsbahn führbar ist. Das Erfassungselement kann beispielsweise ein Abstandssensor sein. Das Erfassungselement kann aber auch einen Betätigungsschalter oder ein sonstiges Schaltelement sein, welches von einem Bediener zur Einstellung eines Betriebs ohne oder mit Führungsschiene bzw. ohne oder mit Abstand Führungsfläche und Werkstückoberfläche betätigbar ist.

Weiterhin vorteilhaft ist eine Kalibrierungseinrichtung, beispielsweise ein Kalibrierungsschalter oder dergleichen, mit dem die Tiefenvorgabeeinrichtung kalibrierbar ist. So kann beispielsweise der bereits erläuterte Markierungssensor und/oder Wegesensor kalibrierbar sein. Weiterhin kann anhand der Kalibrierungseinrichtung beispielsweise eine Geometrie des Arbeitswerkzeugs, insbesondere ein Radius von dessen Außenumfang, einstellbar sein. Somit können beispielsweise Toleranzen bei unterschiedlichen Arbeitswerkzeugen erlernt oder eingestellt werden.

Die Tiefeneinstelleinrichtung weist vorteilhaft ein Tiefeneinstelllager auf, an dem die Werkzeugaufnahme bezüglich der Führungsfläche linear und/oder um eine Tiefenschwenkachse schwenkbar gelagert ist. Es ist beispielsweise möglich, dass eine Linearführung zwischen dem Führungselement und der Werkzeugaufnahme, insbesondere dem Führungselement und der Antriebseinheit, vorgesehen ist, um die Antriebseinheit oder die Werkzeugaufnahme relativ zu der Führungsfläche linear zu verstellen. Selbstverständlich kann an einer derartigen Linearführung zusätzlich noch ein Schwenklager vorgesehen sein. Bevorzugt ist ein Tiefeneinstelllager, welches ausschließlich ein Schwenklager ist oder zumindest ein Schwenklager umfasst. Die Tiefenschwenkachse ist zweckmäßigerweise zu der Führungsfläche oder einer durch die Führungsfläche definierte Führungsebene parallel. Vorzugsweise verläuft die Tiefenschwenkachse quer zu der Regelarbeitsrichtung oder der Bearbeitungsbahn oder beiden. Die Tiefenschwenkachse ist vorzugsweise parallel zur Drehachse der Werkzeugaufnahme.

Prinzipiell möglich ist es, dass die Tiefenschwenkachse unmittelbar in der Führungsfläche verläuft.

Es ist auch möglich, dass die Tiefenschwenkachse einen Abstand zu der Führungsfläche aufweist. Die Tiefenvorgabeeinrichtung ist vorzugsweise zur Auswertung oder Berücksichtigung dieses Abstands der Tiefenschwenkachse zu der Führungsfläche zur Ermittlung des Tiefenvorgabewerts ausgestaltet.

Bevorzugt ist vorgesehen, dass die Tiefenvorgabeeinrichtung zur Ermittlung des Abstandswerts der Bearbeitungskante zu der mindestens einen Werkstückreferenz in Abhängigkeit von einer Winkelposition der Werkzeugaufnahme ausgestaltet ist, um die die Werkzeugaufnahme um die Tiefenschwenkachse bezüglich der Führungsfläche geschwenkt ist. Wenn die Tiefenschwenkachse beispielsweise, insbesondere bei einer Ausgestaltung der Werkzeugmaschine als Tauchsäge, in Arbeitsrichtung hinten angeordnet ist, bewirkt ein Schwenken der Werkzeugaufnahme um die Tiefenschwenkachse zu der Werkstückoberfläche hin, dass die in Arbeitsrichtung vorderen und hinteren Bearbeitungskanten in Arbeitsrichtung nach hinten verlagert werden. Bei einer Ausgestaltung der Werkzeugmaschine derart, dass die Tiefenschwenkachse in Arbeitsrichtung vorn ist, beispielsweise bei einer Pendelhaubensäge, bewirkt ein Schwenken der Werkzeugaufnahme um die Tiefenschwenkachse zur Werkstückoberfläche hin, dass die in Arbeitsrichtung vorderen und hinteren Bearbeitungskanten in Arbeitsrichtung nach vorn verlagert werden.

Es ist vorteilhaft, wenn die Tiefenvorgabeeinrichtung zur Ermittlung des Abstandswerts des Abstands zwischen der mindestens einen Werkstückreferenz und der zugeordneten Bearbeitungskante insbesondere in Abhängigkeit von der Winkelposition der Werkzeugaufnahme bezüglich der Tiefenschwenkachse und zudem in Abhängigkeit von einer Relativbewegung der Werkzeugmaschine und des Werkstücks, insbesondere zu der Bearbeitungsbahn hin und/oder entlang der Bearbeitungsbahn, ausgestaltet ist. Somit wird also beispielsweise anhand des Wegesensors eine lineare Relativbewegung von Werkzeugaufnahme und Werkstück von der Tiefenvorgabeeinrichtung bei der Ermittlung des Abstandswerts ausgewertet und zudem noch die Schwenkbewegung um die Tiefenschwenkachse.

Bevorzugt ist es, wenn die Tiefeneinstelleinrichtung einen Tiefensensor zur Ermittlung der Tiefeneinstellpositionen der Werkzeugaufnahme bezüglich der Führungsfläche aufweist. Der Tiefensensor kann beispielsweise einen Positionssensor, einen Abstandsensor oder dergleichen umfassen. Es ist auch möglich, dass der Tiefensensor einen Wegesensor umfasst. Der Wegesensor ist beispielsweise an einer Linearführung oder Schwenkführung der Tiefeneinstelleinrichtung angeordnet. Bevorzugt ist es, wenn der Tiefensensor einen Winkelsensor zur Erfassung einer Winkelposition der Werkzeugaufnahme umfasst, um die die Werkzeugaufnahme um die Tiefenschwenkachse bezüglich der Führungsfläche geschwenkt ist.

Weiterhin ist es möglich, dass der Tiefensensor beispielsweise durch einen Stellantrieb der Tiefeneinstelleinrichtung gebildet ist oder an dem Stellantrieb angeordnet ist. Der Stellantrieb kann beispielsweise einen Motorsensor umfassen, der eine jeweilige Stellung eines Läufers oder Rotors des Motors erfasst.

Beispielsweise ist es möglich, dass an dem Antrieb ein Schrittzähler vorhanden ist. Bevorzugt ist, dass ausgehend von einer Anfangsposition, in der das Arbeitswerkzeug nicht in das Werkstück eindringt, ein Schrittzähler an einem Servomotor oder Schrittmotor, der einen Bestandteil des Stellantriebs oder den Stellantrieb als solchen bildet, die Schritte des Stellantriebs zählt. Dabei ist eine feine Auflösung, zum Beispiel von mehr als 1000 Schritten, insbesondere mehr als 100 000 Schritten, insbesondere ca. 115000 Schritten, vorteilhaft.

Des Weiteren kann der Tiefensensor auch beispielsweise durch eine Ansteuerung des Stellantriebs gebildet sein, welche die jeweils eingestellte Tiefeneinstellposition als Positionssignal melden kann.

Bevorzugt ist es, wenn die Steuerungseinrichtung oder die Tiefenvorgabeeinrichtung zur Ermittlung der aktuellen Position der vorderen Bearbeitungskante und/oder hinteren Bearbeitungskante des Arbeitswerkzeugs anhand von Sensorwerten des Tiefensensors ausgestaltet ist. Beispielsweise kann die Steuerungseinrichtung oder Tiefenvorgabeeinrichtung eine Veränderung des Ortes der jeweiligen Bearbeitungskante bei einem Eintauchen oder Austauchen des Arbeitswerkzeugs, insbesondere eines Sägeblatts, in das Werkstück anhand von Sensorwerten des Tiefensensors ermitteln.

Mithin ist es also möglich, dass die Steuerungseinrichtung oder Tiefenvorgabeeinrichtung anhand einer Information über die aktuell eingestellte Eintauchtiefe des Arbeitswerkzeuges in das Werkstück den Ort der sich dadurch ergebenden vorderen und hinteren Bearbeitungskante ermittelt, beispielsweise anhand von trigonometrischen Formeln, des Satzes des Pythagoras oder dergleichen.

Es ist aber auch möglich, dass die Werkzeugmaschine mindestens einen Sensor mit einem auf den Außenumfang des Arbeitswerkzeugs gerichteten Erfassungsbereich zur Ermittlung der vorderen Bearbeitungskante und/oder der hinteren Bearbeitungskante aufweist. Bei dieser Ausgestaltung ist eine rechnerische Ermittlung anhand der Werte des mindestens einen Tiefensensors nicht unbedingt notwendig, kann aber dennoch realisiert sein.

Die Tiefeneinstelleinrichtung kann einen Tiefenanschlag aufweisen, der in eine einer Tiefeneinstellposition der Werkzeugaufnahme zugeordnete Stellposition verstellbar ist und an dem die Werkzeugaufnahme oder eine mit der Werkzeugaufnahme bewegungsgekoppelte oder verbundene Komponente, insbesondere der Antriebseinheit, in der Tiefeneinstellposition anschlägt. Der Tiefenanschlag kann manuell verstellbar sein oder auch anhand eines Stellmotors, wie noch deutlicher wird.

Möglich ist es, dass ein Bediener manuell eine Tiefeneinstellposition der Werkzeugaufnahme und somit des Arbeitswerkzeugs einstellt. Bevorzugt ist zum Beispiel vorgesehen, dass die Tiefeneinstelleinrichtung zur manuellen Verstellung durch einen Bediener in die mindestens eine Tiefeneinstellposition ausgestaltet und/oder vorgesehen ist. Dies kann auch in Verbindung mit dem noch vorzustellenden motorischen oder servomotorischen Konzept realisiert sein, d. h. dass der Bediener eine an sich motorisch verstellbare Werkzeugaufnahme in einer Betriebsform manuell verstellt. Es ist aber auch möglich, dass die Werkzeugaufnahme ausschließlich manuell verstellbar ist. Insbesondere bei einer manuell verstellbaren Tiefeneinstellrichtung ist es vorteilhaft, wenn sie mindestens eine Rückstellfeder zur Verstellung der Werkzeugaufnahme in Richtung einer Tiefeneinstellposition aufweist, in der das Arbeitswerkzeug nicht vor die Führungsfläche vorsteht. Die Rückstellfeder kann aber auch bei einer servomotorischen oder mit einer Bremseinrichtung ausgestatteten Tiefeneinstelleinrichtung, insbesondere der nachfolgenden Art, vorteilhaft vorgesehen sein.

Bevorzugt ist vorgesehen, dass die Tiefeneinstelleinrichtung einen Stellmotor zur Verstellung der Werkzeugaufnahme in mindestens eine Tiefeneinstellposition und/oder eines Tiefenanschlags für die Werkzeugaufnahme aufweist. Mit dem Stellmotor kann beispielsweise die Werkzeugaufnahme aktiv zwischen mindestens zwei Tiefeneinstellpositionen verstellbar sein.

Es ist aber auch möglich, dass der Stellmotor einen Tiefenanschlag für die Werkzeugaufnahme oder eine die Werkzeugaufnahme aufweisende Komponente, beispielsweise die Antriebseinheit, in eine Tiefeneinstellposition verstellt.

Eine weitere Variante sieht vor, dass die Tiefeneinstelleinrichtung eine anhand eines Bremsvorgabewerts ansteuerbare Bremseinrichtung zum Abbremsen der Werkzeugaufnahme in mindestens einer Tiefeneinstellposition aufweist. So kann beispielsweise an dem Tiefeneinstelllager eine entsprechende Bremseinrichtung, insbesondere eine Piezo-Bremse oder dergleichen, vorgesehen sein.

Vorteilhaft ist bei der Werkzeugmaschine vorgesehen, dass sie eine Steuerungseinrichtung zur Ansteuerung des Stellmotors in Abhängigkeit von dem Tiefenvorgabewert aufweist. Die Steuerungseinrichtung kann beispielsweise einen Bestandteil der Tiefenvorgabeeinrichtung bilden oder die Tiefenvorgabeeinrichtung umfassen.

Vorteilhaft ist bei der Werkzeugmaschine weiterhin, wenn sie eine Kopplungseinrichtung zur lösbaren Kupplung des Stellmotors und/oder der Bremseinrichtung mit der Werkzeugaufnahme aufweist. Somit kann der Bediener wahlweise die Tiefeneinstellposition manuell oder von Hand einstellen, oder den Stellmotor bzw. die Bremseinrichtung nutzen.

Sowohl bei einem rein manuellen Konzept als auch bei einem motorisch unterstützten oder eine Bremse aufweisenden Konzept sind die nachfolgenden Maßnahmen vorteilhaft:

Bevorzugt ist vorgesehen, dass die Werkzeugmaschine eine, insbesondere optische und/oder akustische, Ausgabeeinrichtung, insbesondere ein Display zur Ausgabe des Tiefenvorgabewerts für einen Bediener der Werkzeugmaschine aufweist. Der Bediener kann den Tiefenvorgabewert oder die Tiefenvorgabewerte an der Ausgabeeinrichtung erkennen, um so beispielsweise eine geeignete Tiefeneinstellposition manuell vorzugeben oder auch die Funktion des Stellmotors oder der Bremseinrichtung zu überwachen.

Das Arbeitswerkzeugs kann beispielsweise in der Art einer Fräswalze oder eines Hobels ausgestaltet sein. Das Arbeitswerkzeugs kann also beispielsweise kreiszylindrische Gestalt haben und an seinem Außenmantel den Schneidbereich aufweisen.

Bevorzugt ist jedoch, wenn als Arbeitswerkzeug ein blattförmiges Trennwerkzeug, insbesondere ein Sägeblatt, vorgesehen ist. Der Schneidbereich ist also an einer Schmalseite des Trennwerkzeugs vorgesehen.

An dem Schneidbereich können Zähne, eine Körnung oder dergleichen andere zum Einschneiden in das Werkstück geeignete Schleifmittel vorgesehen sein. Selbstverständlich können an dem Schneidbereich auch auswechselbare Schleifmittel, beispielsweise Schneidplatten oder dergleichen, vorhanden sein.

Ein Sicherheitskonzept sieht vor, dass die Werkzeugmaschine vorteilhaft mindestens ein Bedienelement, insbesondere einen Totmannschalter, aufweist, welches während eines Betriebs durch einen Bediener der Werkzeugmaschine zur Aufrechterhaltung des Betriebs der Werkzeugmaschine dauerhaft und/oder in vorbestimmten zeitlichen Mindestabständen zu betätigen ist. Es können selbstverständlich mehrere derartige Totmannschalter oder Bedienelemente vorgesehen sein, beispielsweise an zwei oder mehreren der nachfolgend erläuterten Handgriffe. Vorteilhaft ist jeder Hand eines Bedieners jeweils ein derartiges Bedienelement oder Totmannschalter zugeordnet, wobei die Bedienelemente so weit voneinander entfernt sind, dass der Bediener zwei Hände zu deren Betätigung benötigt.

Bei der Werkzeugmaschine ist es vorteilhaft, wenn sie mindestens einen an dem Führungselement ortsfest angebrachten Handgriff und/oder mindestens einen an der Antriebseinheit ortsfest angebrachten Handgriff aufweist. Der ortsfest angebrachte Handgriff verändert selbst dann, wenn die Werkzeugaufnahme ihre Position relativ zur Führungsfläche verändert, seine Position nicht. Somit kann der Bediener die Werkzeugmaschine optimal halten. Der an der Antriebseinheit angeordnete Handgriff ermöglicht zum Beispiel eine haptische Rückmeldung für den Bediener, welche Tiefeneinstellposition die Werkzeugmaschine einnimmt.

Vorteilhaft ist vorgesehen, dass die Werkzeugmaschine einen Bestandteil eines Systems bildet, welches die Werkzeugmaschine sowie eine auf das Werkstück auflegbare Führungsschiene aufweist, wobei an der Führungsschiene und dem Führungselement sich entlang einer Längsachse erstreckende und in Gebrauchslage des Systems ineinander eingreifende Führungskonturen zum Führen des Führungselements entlang der Bearbeitungsbahn angeordnet sind.

Nachfolgend wird ein Ausführungsbeispiel der Erfindung anhand der Zeichnung erläutert. Es zeigen:

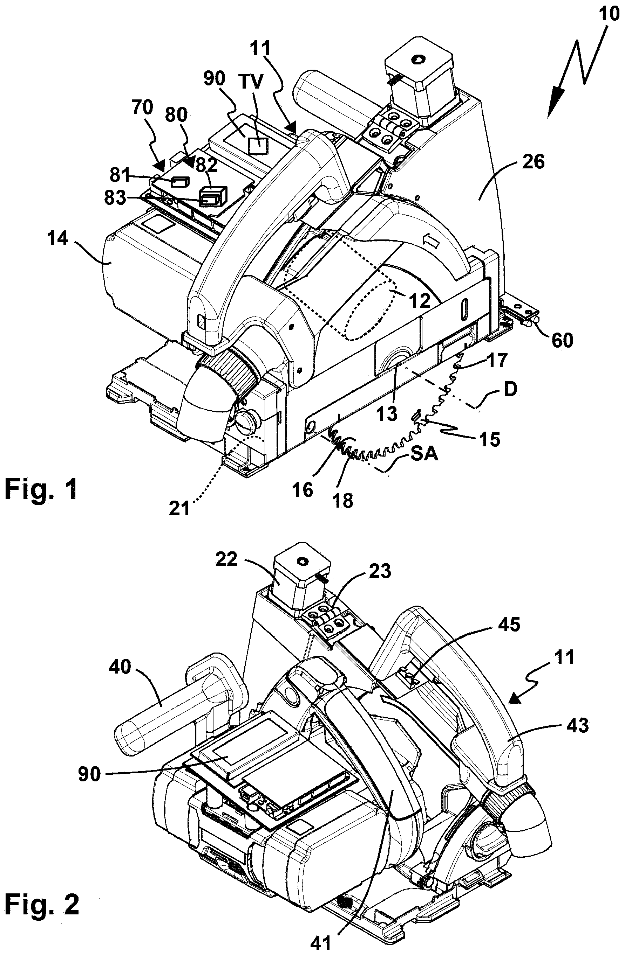

Figur 1      eine perspektivische Schrägansicht von schräg hinten einer Hand-Werkzeugmaschine, die in

Figur 2      einer weiteren Schrägansicht von einer entgegengesetzten Seite, ebenfalls von schräg hinten dargestellt ist,

Figur 3      eine Seitenansicht der Werkzeugmaschine der vorstehenden Figuren wobei eine Abdeckung für ein Trennwerkzeug geöffnet ist und die Werkzeugaufnahme mit dem Trennwerkzeug in einer ersten Tiefeneinstellposition dargestellt ist, bei der das Trennwerkzeug nicht vor eine Führungsfläche vorsteht,

Figur 4      die Werkzeugmaschine nach Figur 3 in einer zweiten Tiefeneinstellposition, bei der das Trennwerkzeug mit einem ersten Abstand vor die Führungsfläche vorsteht und

Figur 5      die Werkzeugmaschine der Figuren 3 und 4 in einer dritten Tiefeneinstellposition, bei der das Trennwerkzeug weiter als in der zweiten Tiefeneinstellposition vor die Führungsfläche vorsteht,

Figur 6      eine Seitenansicht der Werkzeugmaschine der vorstehenden Figuren von schräg vorn,

Figur 7      eine schematische Seitenansicht der Werkzeugmaschine der vorstehenden Figuren sowie ein Werkstück,

Figur 8      eine Variante der Werkzeugmaschine der vorstehenden Figuren und eine Führungsschiene zur Führung derselben.

Eine Werkzeugmaschine 10 gemäß der Zeichnung weist ein Führungselement 30 mit einer Führungsplatte 31 auf, an dem eine Führungsfläche 32 vorgesehen ist. An der Führungsfläche 32 ist eine Führungsaufnahme 33 für einen Führungsvorsprung 52 einer Führungsschiene 50 vorgesehen.

Die Werkzeugmaschine 10 kann mit ihrer Führungsfläche 32 unmittelbar auf einer Werkstückoberfläche WO eines Werkstücks W entlang geführt werden, um dort beispielsweise einen Sägeschnitt einzubringen. Es ist aber auch möglich, die Führungsschiene 50 mit ihrer Auflagefläche 53 auf die Werkstückoberfläche WO aufzulegen, um die Werkzeugmaschine 10 zu führen. Diese gleitet dann mit ihrer Führungsfläche 32 auf einer Führungsfläche 51, die an einer zu der Auflagefläche 53 entgegengesetzten Seite der Führungsschiene 50 vorgesehen ist, entlang. Dabei kann der Führungsvorsprung 52 in die Führungsaufnahme 53 eingreifen, um die Werkzeugmaschine 10 entlang einer Regelarbeitsrichtung AR zu führen.

Die Werkzeugmaschine 10 weist eine Antriebseinheit 11 auf, die einen Antriebsmotor 12 zum Antreiben einer Werkzeugaufnahme 13 um eine Drehachse D aufweist. Der Antriebsmotor 12 kann die Werkzeugaufnahme 13 direkt oder über ein nicht dargestelltes Getriebe antreiben. Zur Energieversorgung der Werkzeugmaschine 10 ist eine Energieversorgungseinrichtung 14, beispielsweise ein wiederaufladbarer Energiespeicher, insbesondere eine Batterie oder dergleichen, vorgesehen. Selbstverständlich ist auch eine Stromversorgung über ein in der Zeichnung nicht dargestelltes Netzkabel der Werkzeugmaschine 10 möglich oder denkbar, mit dem die Werkzeugmaschine 10 an ein elektrisches Energieversorgungsnetz, beispielsweise ein Wechselspannungsnetz, anschließbar ist.

An der Werkzeugaufnahme 13 ist ein Arbeitswerkzeug 15 lösbar angeordnet. Das Arbeitswerkzeug 15 ist beispielsweise ein Sägeblatt. Das Arbeitswerkzeug 15 weist einen Plattenkörper 16 auf, an dessen radialem Außenumfang 17 ein Schneidbereich 18 mit beispielsweise Sägezähnen oder dergleichen anderen Schneidmitteln angeordnet ist.

Die Antriebseinheit 11 ist anhand einer Tiefeneinstelleinrichtung 20 um eine Tiefenschwenkachse SA schwenkbar gelagert, die parallel zur Drehachse D ist.

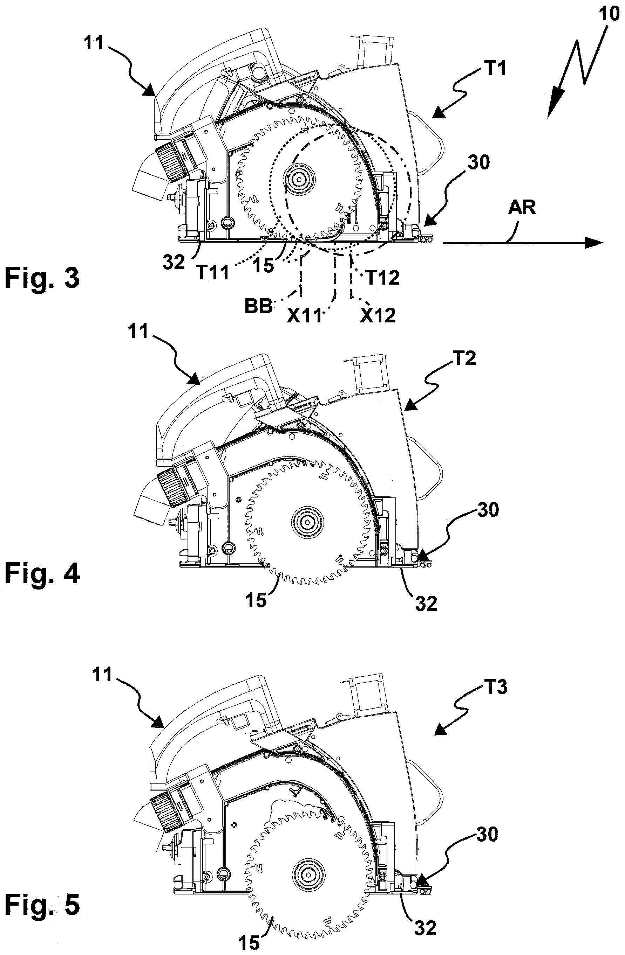

Somit können die Antriebseinheit 11 und deren Werkzeugaufnahme 13 zwischen mehreren Tiefeneinstellpositionen relativ zur Führungsfläche 32 verstellt werden, von denen exemplarisch in den Figuren 3-5 Tiefeneinstellpositionen T1, T2 und T3 dargestellt sind. Dabei steht der Schneidbereich 18 in der Tiefeneinstellposition T1 beispielsweise nicht vor die Führungsfläche 32 vor und in den Tiefeneinstellpositionen T2, T3 jeweils weiter vor die Führungsfläche 32 vor. Dementsprechend tief schneidet das Arbeitswerkzeugs 15 in die Werkstückoberfläche WO ein.

Die Tiefeneinstelleinrichtung 20 umfasst ein an dem Führungselement 30 angeordnetes Tiefeneinstelllager 21, das die Antriebseinheit 11 um die Tiefenschwenkachse SA schwenkbar bezüglich des Führungselements 30 lagert. Zudem umfasst die Tiefeneinstelleinrichtung 20 einen Stellmotor 22 zur Einstellung der Tiefeneinstellpositionen, zum Beispiel der Tiefeneinstellpositionen T1, T2 und T3. Der Stellmotor 22 ist an der Antriebseinheit 11 festgelegt, vorzugsweise schwenkbar anhand eines Lagers 23. Der Stellmotor 22 treibt eine Spindel 24 an, die in eine Spindelmutter 25 eingreift, die bezüglich des Führungselements 30 ortsfest ist. Bevorzugt ist der Stellmotor 22 als Ganzes oder in Bezug auf seine beweglichen Komponenten in einem Schutzgehäuse 26 eingehaust.

Die Spindelmutter 25 ist vorzugsweise eine sogenannte vorgespannte Spindelmutter und/oder eine Spindelmutter mit wenig oder keinem Axialspiel. Somit ist eine exakte Tiefeneinstellung der Antriebseinheit 11 oder der Werkzeugaufnahme 23 bezüglich der Führungsfläche 32 realisierbar.

Selbstverständlich wäre es auch möglich, den Stellmotor 22 ortsfest am Führungselement 30 anzuordnen und die Spindelmutter 24 an der Antriebseinheit 11. Auch andere servomotorische Konzepte, zum Beispiel einen am Tiefeneinstelllager 21 angeordneten oder anordenbaren Drehantrieb, sind ohne weiteres möglich.

Anhand des Lagers 23 kann der Stellmotor 22 unterschiedlichen Winkelstellungen der Spindel 24 bezüglich des Führungselements 30 folgen.

Es ist auch möglich, dass das Lager 23 als eine Kopplungseinrichtung ausgestaltet ist, anhand derer der Stellmotor 22 von der Antriebseinheit 11 entkoppelbar oder lösbar ist. Dazu kann beispielsweise ein Achselement des Lagers 23 entfernt werden oder das Lager 23 als Ganzes vom Stellmotor 23 oder der Antriebseinheit 11 gelöst werden.

Anhand eines Tiefensensors 44 kann die Tiefeneinstelleinrichtung 20 die jeweilige Tiefeneinstellpositionen, beispielsweise die Tiefeneinstellpositionen T1, T2 oder T3 sowie weitere Tiefeneinstellpositionen ermitteln. Der Tiefensensor 44 umfasst beispielsweise einen Schrittzähler oder Umdrehungszähler am Stellmotor 22.

Bevorzugt ist für die obere Tiefeneinstellposition, bei der das Arbeitswerkzeug 15 nicht in das Werkstück W eintaucht oder eingreift, ein weiterer Tiefensensor 45, beispielsweise ein Mikroschalter, vorgesehen, der die obere Endstellung der Antriebseinheit 11 erfasst.

Ausgehend von der durch den die oberste Tiefeneinstellposition T1 erfassten Eintauchtiefe des Arbeitswerkzeuges 15 in das Werkstück W erfasst beispielsweise der Tiefensensor 44 die sich daran anschließenden weiteren Tiefeneinstellpositionen.

Alternativ oder ergänzend zu den Tiefensensoren 44, 45 könnte auch Winkelsensor 46 beispielsweise am Tiefeneinstelllager 21 vorgesehen sein.

Ein Bediener kann die Werkzeugmaschine 10 anhand von Handgriffen 40, 41, 43 ergreifen. Der Handgriff 40 ist in der Regelarbeitsrichtung AR vorn am Führungselement 30 ortsfest angeordnet. Der Handgriff 41 ist an der Antriebseinheit 11 angeordnet. Der Handgriff 43 ist ortsfest an dem Schutzgehäuse 26 angeordnet, d. h. ebenfalls ortsfest bezüglich des Führungselements 30.

Somit kann der Bediener die Antriebseinheit 11, die durch den Stellmotor 22 relativ zum Führungselement 30 verstellbar ist, ergreifen. Der Bediener kann aber auch bezüglich des Führungselements 30 ortsfeste Handgriffe 40 und 43 ergreifen, d. h. solche Handgriffe, die sich selbst dann nicht bewegen, wenn die Antriebseinheit 11 relativ zum Führungselement 30 verstellt wird. Jedenfalls ist es für den Bediener möglich, anhand der Handgriffe 40 und 43 sozusagen das Führungselement 30 sicher zu ergreifen, um das Werkstück W zu bearbeiten.

Vorteilhaft ist die Werkzeugmaschine 10 nur dann betriebsbereit, wenn der Bediener Bedienelemente 42, beispielsweise Totmannschalter oder dergleichen, dauerhaft oder in vorbestimmten zeitlichen Abständen, betätigt. Beispielsweise sind an den räumlich zueinander beabstandeten Handgriffen 40 und 43 jeweils Bedienelemente 42 vorgesehen. Die Handgriffe 40, 43 sind derart weit voneinander entfernt, dass der Bediener mit jeweils einer Hand einen der Handgriffe 40 und 43 umfassen und das dort angeordnete Bedienelement 42 betätigen kann. Dadurch kann der Bediener beispielsweise die Werkzeugmaschine 10 einschalten, ausschalten oder den eingeschalteten Zustand beibehalten.

An dem Führungselement 30 ist ein Markierungssensor 60 angeordnet. Der Markierungssensor 60 dient zum Ermitteln von Werkstückreferenzen RB und RE, die einem für einen Beginn der Bearbeitung des Werkstücks W durch das Arbeitswerkzeug 15 vorgesehenen Bearbeitungbeginnort BB und einem für eine Beendigung der Bearbeitung des Werkstücks W durch das Arbeitswerkzeug 15 vorgesehenen Bearbeitungsendeort BE zugeordnet ist. Der Markierungssensor 60 ist oder umfasst beispielsweise eine Kamera, mit der die Werkstückreferenzen RB und RE erfassbar sind. Die Werkstückreferenzen RB und RE sind beispielsweise Strichmarkierungen oder dergleichen andere optisch erfassbare Markierungen, die an der Werkstückoberfläche WO durch einen Bediener angebracht sind.

Es ist vorgesehen, dass das Arbeitswerkzeug 15 das Werkstück W zwischen dem Bearbeitungbeginnort BB und dem Bearbeitungsendeort BE entlang einer Bearbeitungsbahn BA bearbeitet, beispielsweise einen Sägeschnitt einbringt.

Dazu wird die Werkzeugmaschine und mithin der Markierungssensor 60, beispielsweise ohne Nutzung der Führungsschiene 50 oder unter Nutzung derselben, nämlich entlang der Führungsschiene 50 zu den Werkstückreferenzen RB und/oder RE, insbesondere über die Werkstückreferenzen RB und RE hinweg, um deren Position zu erfassen.

Die Werkstückreferenzen RB und RE sind nur dann in einem Erfassungsbereich 61 des Markierungssensors 60, wenn dieser unmittelbar in die Nähe der Werkstückreferenzen RB und RE gebracht wird.

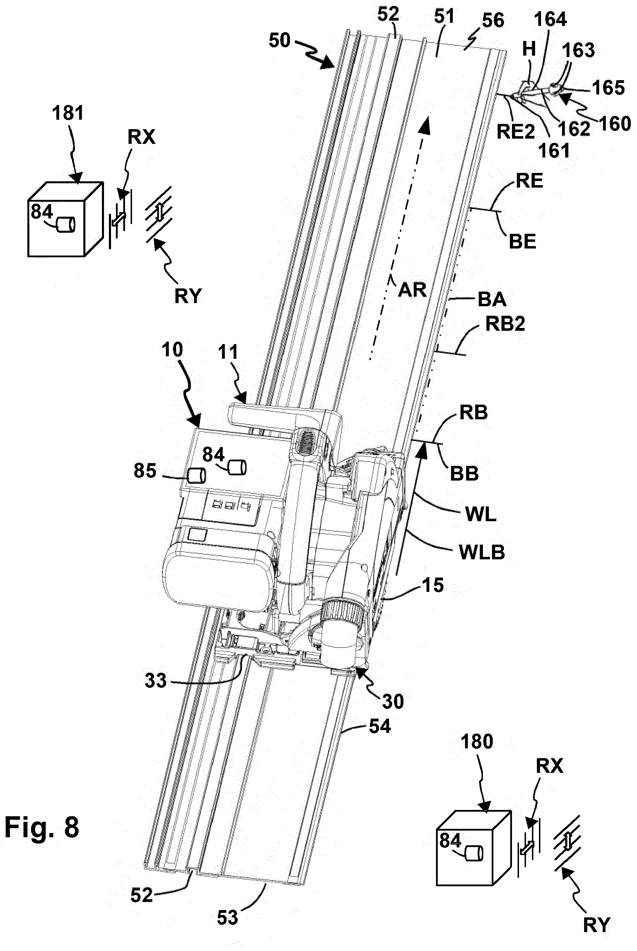

Die Werkstückreferenzen RB und RE oder nachfolgend erläuterte Werkstückreferenzen RB2 und RE2 können aber auch durch ein mobiles Sensorgerät erfasst werden, welches einen Markierungssensor 160 darstellt. Das Sensorgerät oder der Markierungssensor 160 kann unabhängig von der Werkzeugmaschine 10 relativ zu dem Werkstück W bewegt werden, d. h. die Hand-Werkzeugmaschine 10 kann an Ort und Stelle, beispielsweise in der in Figur 8 dargestellten Position, verbleiben, während ein Bediener anhand des Markierungssensors 160 die Werkstückreferenzen RB2 und RE2 ermittelt. Der Markierungssensor 160 umfasst beispielsweise einen insbesondere stiftartigen Markierungsaufnehmer 162. Eine Bediener kann den Markierungsaufnehmer 162 mit einer schematisch dargestellten Hand H ergreifen. Am Markierungsaufnehmer 162 ist eine beispielsweise mechanische Referenz 161 in Gestalt beispielsweise seiner Spitze oder seines Längsendbereiches vorgesehen, die der Bediener an den Ort der Werkstückreferenzen RB2 und RE2 bringen kann oder auf diesen Ort richten kann, d. h. dass die mechanische Referenz 161 einen Abstand zu den Orten der Werkstückreferenzen RB2 und RE2 aufweist. Beispielsweise ist in diesem Fall an dem Markierungssensor 160 eine Lichtquelle angeordnet, die der Bediener auf den Ort der Werkstückreferenzen RB2 und RE2 richten kann.

Der Markierungssensor 160 erfährt oder erhält sein Bezugssystem beispielsweise durch mindestens einen Koordinatensender 84 an Bord der Werkzeugmaschine 10 und/oder an Bord eines oder mehrerer Koordinatengeber 180, 181. Der Koordinatensender 84 sendet Referenzinformationen RX und RY, beispielsweise ein Muster von Linien, die winkelig, beispielsweise rechtwinkelig zueinander sind. Es ist möglich, dass der Koordinatensender 84 sequentiell oder gleichzeitig das jeweilige Linienmuster bzw. die Referenzinformation RX und RY sendet.

Die Koordinatengeber 180,181 weisen beispielsweise Gehäuse 182 auf, die von der Hand-Werkzeugmaschine 10 separat sind und frei auf dem Werkstück W positionierbar und insbesondere abstellbar sind.

Bevorzugt sind mehrere Koordinatensender 84 vorgesehen, sodass der Markierungssensor 160 anhand eines oder mehrerer Sensoren 163 die Referenzinformationen RX und/oder RY empfangen kann. Die Anordnung der Sensoren 163 in einem Abstand zueinander an dem Markierungssensor 160 ermöglicht zudem eine Triangulation oder anderweitig andere räumliche Bestimmung der Koordinaten der Werkstückreferenzen RB2 und RE2 auch dann, wenn nur einer Koordinatensender 84 vorhanden ist, beispielsweise nur ein Koordinatensender 84 an Bord der Werkzeugmaschine 10.

Durch ein Schaltelement 164 kann der Bediener beispielsweise den Markierungssensor 160 zum Senden der Koordinaten der Werkstückreferenzen RB2 und RE2 anhand eines Senders 165, beispielsweise eines Bluetooth-Senders oder dergleichen anderen Funksenders oder drahtlosen Senders an einen Empfänger 85 an Bord der Werkzeugmaschine 10 betätigen.

Die Werkstückreferenzen RB und RE oder RB2 und RE2 definieren einen Bearbeitungbeginnort BB und einen Bearbeitungsendeort BE, zwischen denen ein Sägeschnitt in das Werkstück W einzubringen ist.

Zur Ermittlung eines Abstands der Werkzeugmaschine 10 zu den Werkstückreferenzen RB und RE dient ein Wegesensor 62. Der Wegesensor 62 ist beispielsweise in der Art eines Maussensors oder dergleichen ausgestaltet und kann eine Weglänge WL ermitteln, die die Werkzeugmaschine 10 relativ zu dem Werkstück W entlang der Bewegungsbahn BA zurücklegt. Dazu erfasst der Wegesensor 62 beispielsweise Markierungen an der Führungsschiene 50, optisch erkennbare Merkmale an der Werkstückoberfläche WO oder dergleichen. Beispielsweise kann der Wegesensor 62 auch eine Wegelänge WLB bis zu der Referenzmarkierung RB und somit zu dem Beginn der Bewegungsbahn BA ermitteln.

Der Wegesensor 62 und der Markierungssensor 60 sind in Bezug auf die Regelarbeitsrichtung AR in derselben Längsposition angeordnet, weisen aber quer zur Bewegungsbahn BA einen Querabstand auf. Mithin ist also der Wegesensor 62 beim Betrieb der Werkzeugmaschine 10 in einem Querabstand zur Bewegungsbahn BA angeordnet und erfasst somit die Länge eines Stellweges entlang des Werkstücks W parallel zur Bewegungsbahn BA.

Wenn das Arbeitswerkzeug 15 in das Werkstück W eingreift, bilden sich eine in Bezug auf die Regelarbeitsrichtung AR hintere Bearbeitungskante KB und eine in Bezug auf die Regelarbeitsrichtung AR vordere Bearbeitungskante KE aus. Die Bearbeitungskante KB ist dem Bearbeitungbeginnort BB, die Bearbeitungskante KE dem Bearbeitungsendeort BE zugeordnet.

Damit die Bearbeitungskante KB exakt an dem Bearbeitungbeginnort BB platzierbar ist, weist die Werkzeugmaschine 10 eine Tiefenvorgabeeinrichtung 70 auf. Die Tiefenvorgabeeinrichtung 70 ermittelt beispielsweise in Abhängigkeit von einem Abstandswert DB einer rechnerisch ermittelten Position der Bearbeitungskante KB zu dem Bearbeitungbeginnort BB einen Tiefenvorgabewert TV, den die Tiefenvorgabeeinrichtung an einer Ausgabeeinrichtung 90, insbesondere einem Display, ausgibt.

Die Tiefenvorgabeeinrichtung 70 bildet beispielsweise einen Bestandteil einer Steuerungseinrichtung 80. Die Steuerungseinrichtung 80 umfasst einen Prozessor 81 zur Ausführung von Programmbefehlen eines Steuerungsprogramms 83, welches in einem Speicher 82 der Steuerungseinrichtung 80 speicherbar oder gespeichert ist.

Die Steuerungseinrichtung 80 kann in Abhängigkeit von dem Tiefenvorgabewert TV den Stellmotor 22 zur Einstellung einer dem Tiefenvorgabewert TV entsprechenden Tiefeneinstellposition ansteuern, zum Beispiel der Tiefeneinstellposition T1 oder T2.

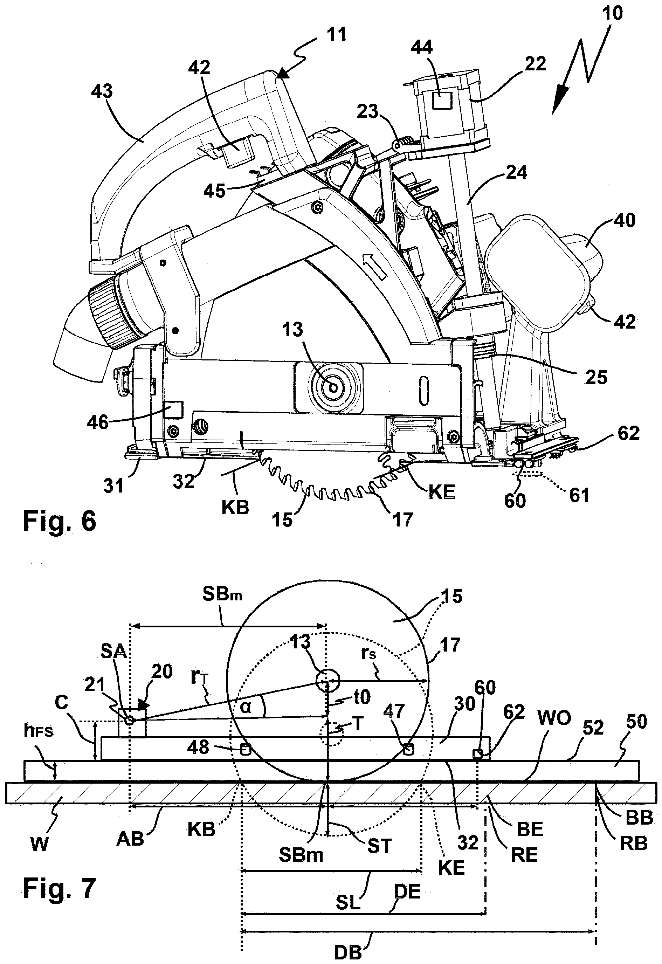

Bei einer Bewegung der Werkzeugmaschine 10 zu dem Bearbeitungbeginnort steuert die Steuerungseinrichtung den Stellmotor 22 vorzugsweise in eine in Figur 7 dargestellte Startposition, bei der der Außenumfang 17 bzw. der Schneidbereich 18 noch knapp oberhalb der Werkstückoberfläche WO ist. Mithin schneidet also das Arbeitswerkzeug 15 noch nicht in das Werkstück W ein, liegt aber sozusagen tangential mit seinem Außenumfang 17 an dem Werkstück W beinahe an.

In Figur 7 sind folgende Referenzen eingezeichnet:

$r_S$    Radius des Arbeitswerkzeugs 15

T    Eintauchtiefe des Arbeitswerkzeugs in das Werkstück bezogen auf einen Abstand der Tiefenschwenkachse SA zur Werkstückoberfläche WO

$r_T$    radialer Abstand der Drehachse D der Werkzeugaufnahme oder des Arbeitswerkzeugs zur Tiefenschwenkachse SA. Mit diesem Abstand oder Radius $r_T$ schwenkt die Drehachse D um die Tiefenschwenkachse SA.

α    Schwenkwinkel der Drehachse D um die Tiefenschwenkachse SA

C    Abstand zwischen der Führungsfläche 51 und der Tiefenschwenkachse TS

$h_{FS}$    Höhe der Führungsschiene 50

SBm    Scheitelpunkt des Arbeitswerkzeugs 15 bzw. Mitte des Arbeitswerkzeugs 15

In der von der in Figur 7 dargestellten Ausgangsposition bei Betrieb mit der Führungsschiene 50, also bei einer Sägetiefe = ST0, bei der das Arbeitswerkzeug 15 noch nicht in das Werkstück W eingreift, sondern knapp oberhalb angeordnet ist, ergibt sich ein Abstand AB zwischen der Tiefenschwenkachse SA und dem Scheitelpunkt SBm des Arbeitswerkzeugs 15 parallel zur Führungsfläche 32 beispielsweise wie folgt:

$$AB\,(ST0) = \sqrt{rT^2 - t0^2} \quad (1)$$

wobei t0 der vertikale Abstand zwischen der Tiefenschwenkachse SA und der Drehachse D zur Werkstückoberfläche WO ist.

Vor dem Einschneiden des Arbeitswerkzeuges 15 in das Werkstück W ermittelt die Steuerungseinrichtung 80 z.B. die vordere Bearbeitungskante KE als einen Abstand zwischen dem Markierungssensor 62 und dem Scheitelpunkt SBm des Arbeitswerkzeugs 15, welches sich ja knapp oberhalb der Werkstückoberfläche WO befindet, als eine Differenz zwischen dem Abstand des Markierungssensors 60 von der Tiefenschwenkachse SA und dem Abstand AB (ST0). Diese Werte können aber auch in der Steuerungseinrichtung 80, insbesondere im Speicher 82, dauerhaft gespeichert sein.

Wenn die Werkzeugmaschine 10 dann so weit in Richtung des Bearbeitungbeginnorts BB verstellt ist, dass die Bearbeitungskante KB an der Werkstückreferenz RB ist, steuert die Steuerungseinrichtung 80 den Stellmotor 22 zu einem insbesondere kontinuierlichen Verstellen der Werkzeugaufnahme 13 bzw. der Antriebseinheit 11 in eine untere Tiefeneinstellposition, beispielsweise die Tiefeneinstellposition T3 an. Diese behält die Werkzeugaufnahme 13 bei, bis die in Regelarbeitsrichtung AR vordere Bearbeitungskante KE am Bearbeitungsendeort BE angelangt ist. Den entlang der Bearbeitungsbahn BA zurückgelegten Weg und somit den Abstand vom Bearbeitungsendeort BB kann die Steuerungseinrichtung 80 oder die Tiefenvorgabeeinrichtung 70 beispielsweise anhand des Wegesensors 62 ermitteln. Das kontinuierliche Verstellen der Werkzeugaufnahme 13 dabei so zu verstehen, dass die Werkzeugaufnahme 13 ausgehend vom Bearbeitungbeginnort BB bei einer weiteren kontinuierlichen Vorschubbewegung der Werkzeugmaschine 10 in Regelarbeitsrichtung AR kontinuierlich weiter in Richtung der unteren Tiefeneinstellposition T3 verstellt wird, was in Figur 3 z.B. durch Tiefeneinstellpositionen T11 und T12 angedeutet ist. Die Tiefeneinstellpositionen T11 und T12 sind Längspositionen X11 und X12 des Arbeitswerkzeuges 15 oder der Werkzeugaufnahme 13 bezüglich der Regelarbeitsrichtung AR zugeordnet. Wenn aber beispielsweise in der Tiefeneinstellposition T11 die Vorschubbewegung der Werkzeugmaschine 10 entlang der Arbeitsrichtung AR sozusagen ins Stocken gerät, d. h. die Werkzeugmaschine 10 nicht weiter in Richtung Arbeitsrichtung AR bewegt wird sondern an der Längsposition X11 stehen bleibt, behält die Werkzeugaufnahme 13 die Tiefeneinstellposition T11 bei und wird erst dann weiter in Richtung der Tiefeneinstellposition T12 bewegt, wenn die Werkzeugmaschine 10 in Arbeitsrichtung AR in eine der Tiefeneinstellposition T12 zugeordnete Längsposition verstellt ist.

Ein Verhältnis zwischen einer aktuellen Sägetiefe ST, mit der das Arbeitswerkzeug 15 in das Werkstück W einschneidet, und einem Abstand SL zwischen der vorderen Bearbeitungskante KB und der hinteren Bearbeitungskante KE, der beispielsweise einer Sehne eines kreisförmigen Sägeblatts mit einem Radius rs entspricht, lässt sich wie folgt ermitteln:

$$ST = rs - \frac{1}{2}\sqrt{4 \times rs^2 - SL^2} \qquad (2)$$

Den Abstand SL könnte man auch Länge eines Sägeschnittes bezeichnen. Zur Veranschaulichung des Abstands SL ist das Arbeitswerkzeug 15 in Figur 7 in einem in das Werkstück W eingetauchten Zustand gestrichelt in Figur 7 dargestellt.

Mit zunehmender Sägetiefe wird der Abstand SL größer und somit wird die vordere Bearbeitungskante KE in Regelarbeitsrichtung AR sozusagen nach vorne und gleichzeitig die hintere Bearbeitungskante KB nach hinten bezüglich der Regelarbeitsrichtung AR verstellt, auch wenn die Werkzeugmaschine 10 bezüglich der Regelarbeitsrichtung AR ortsfest stehen bleiben würde.

Die Steuerungseinrichtung 80 berücksichtigt diese Relation gemäß Formel (2) und steuert den Stellmotor 22 zur Einstellung der jeweils zulässigen Sägetiefe ST an, so dass die hintere Bearbeitungskante KB am Bearbeitungbeginnort BB in das Werkstück W einschneidet und die vordere Bearbeitungskante KE am Bearbeitungsendeort BE aus dem Werkstück W austaucht. Dabei berücksichtigt die Steuerungseinrichtung 80 die Verstellbewegung der Werkzeugmaschine 10 entlang der Bearbeitungsbahn BA, beispielsweise anhand des Wegesensors 62.

Weiterhin berücksichtigt die Steuerungseinrichtung 80 vorteilhaft den Abstand zwischen dem Scheitelpunkt SBm des Arbeitswerkzeuges 15 und der Tiefeneinstellachse SA parallel zu der Bearbeitungsbahn BA bei der Ermittlung des aktuellen Ortes der vorderen Bearbeitungskante KE und/oder der hinteren Bearbeitungskante KB. Der Scheitelpunkt SBm durchläuft nämlich eine Kreisbahn um die Tiefeneinstellachse SA. Beispielsweise ermittelt die Steuerungseinrichtung 80 in Abhängigkeit von dem Winkel $\alpha$ die Position der vorderen oder hinteren Bearbeitungskante KE, KB.

Der Wegesensor 62 ermittelt eine Verstellung der Werkzeugmaschine 10 entlang der Bearbeitungsbahn BA. Dieser Verstellbewegung ist zum einen die Schwenkbewegung des Arbeitswerkzeuges 15 um die Tiefeneinstellachse SA überlagert, sodass die vordere und hintere Bearbeitungskante KE und KB beispielsweise bei einer Vorwärtsbewegung bezüglich der Bearbeitungsbahn BA eine zusätzliche, überlagerte Bewegungskomponente in der Regelarbeitsrichtung AR oder entgegen zu derselben (einer Rückwärtsbewegung der Werkzeugmaschine 10) machen, zum andern eine weitere Bewegung der vorderen und hinteren Bearbeitungskante KE und KB überlagert, die sich durch die durch die jeweilige Sägetiefe ST ergibt. Beides wird von der Steuerungseinrichtung 80 bei der Ansteuerung des Stellmotors 22 und/oder der Ermittlung des Tiefenvorgabewerts TV berücksichtigt.

Am Bearbeitungsendeort BE ist es möglich, dass die Steuerungseinrichtung 80 den Stellmotor 22 schon vor Erreichen der Werkstückreferenz RE zu einem kontinuierlichen Verstellen der Werkzeugaufnahme 13 in eine obere Tiefeneinstellposition, bei der das Arbeitswerkzeug 15 nicht mehr in das Werkstück W eingreift, angesteuert. Bevorzugt ist jedoch ein möglichst schnelles oder schlagartiges Verstellen der Werkzeugaufnahme 13 in die obere Tiefeneinstellposition. Dazu dreht der Stellmotor 22 beispielsweise mit Maximaldrehzahl.

Beispielsweise ermittelt die Steuerungseinrichtung 80 einen Abstandswert DE der Bearbeitungskante BK zu dem Bearbeitungsendeort BE, um anhand des Abstandswerts DE den Tiefenvorgabewert TV derart zu ermitteln, dass das Arbeitswerkzeug 15 am Bearbeitungsendeort BE aus dem Werkstück W austaucht.

Weiterhin können die Steuerungseinrichtung 80 und/oder die Tiefenvorgabeeinrichtung 70 anhand von Sensoren 47, 48 die aktuelle Position der vorderen und hinteren Bearbeitungskante KE und KB ermitteln. Die Sensoren 47, 48 sind beispielsweise Kameras, optische Sensoren oder umfassen optische Sensoren, die im Bereich der vorderen und hinteren Bearbeitungskante KE und KB des Arbeitswerkzeuges 15, insbesondere am oder in dem Schutzgehäuse 26, angeordnet sind.

**Patentansprüche**

1. Mobile Werkzeugmaschine (10), nämlich Hand-Werkzeugmaschine oder halbstationäre Werkzeugmaschine, zur Bearbeitung eines Werkstücks (W), wobei die Werkzeugmaschine (10) ein Führungselement (30) mit einer Führungsfläche (32) zum relativen Führen der Werkzeugmaschine (10) und einer Werkstückoberfläche (WO) des Werkstücks (W) aneinander entlang einer Bearbeitungsbahn (BA), insbesondere einer Bearbeitungslinie, aufweist, wobei die Werkzeugmaschine (10) eine Antriebseinheit (11) mit einem Antriebsmotor (12) zum Antreiben einer an der Antriebseinheit (11) angeordneten Werkzeugaufnahme (13) zur Aufnahme eines Arbeitswerkzeugs (15) aufweist, wobei die Werkzeugmaschine (10) eine Erfassungseinrichtung zur Erfassung mindestens einer Werkstückreferenz (RB, RE) aufweist, die bezüglich der Bearbeitungsbahn (BA) einem für einen Beginn der Bearbeitung des Werkstücks (W) durch das Arbeitswerkzeug (15) vorgesehenen Bearbeitungbeginnort (BB) oder einem für eine Beendigung der Bearbeitung des Werkstücks (W) durch das Arbeitswerkzeug (15) vorgesehenen Bearbeitungsendeort (BE) zugeordnet ist, wobei die Werkzeugaufnahme (13) zum Drehantreiben des Arbeitswerkzeugs (15) um eine Drehachse (D) ausgestaltet ist und zur Einstellung einer Eindringtiefe des Arbeitswerkzeugs (15) in das Werkstück (W) anhand einer Tiefeneinstelleinrichtung (20) der Werkzeugmaschine (10) zwischen Tiefeneinstellpositionen (T1, T2, T3) verstellbar ist, wobei das Arbeitswerkzeug (15) an seinem radialen Außenumfang (17) einen Schneidbereich (18) zum Einschneiden in das Werkstück (W) unter Ausbildung einer Bearbeitungskante (KB, KE) aufweist, die in Abhängigkeit von mindestens zwei Tiefeneinstellpositionen (T1, T2, T3), bei denen das Arbeitswerkzeug (15) unterschiedlich weit vor die Führungsfläche (32) vorsteht, unterschiedliche Abstände zu der mindestens einen Werkstückreferenz (RB, RE) aufweist, **dadurch gekennzeichnet, dass** die Werkzeugmaschine (10) eine Tiefenvorgabeeinrichtung (70) zur Ermittlung eines Abstandswerts (DB) des Abstands der Bearbeitungskante (KB, KE) zu der mindestens einen Werkstückreferenz (RB, RE) und zur Ermittlung eines Tiefenvorgabewerts (TV) für die Tiefeneinstellposition (T1, T2, T3) in Abhängigkeit von dem Abstandswert (DB) aufweist.

2. Werkzeugmaschine (10) nach Anspruch 1, **dadurch gekennzeichnet, dass** die Tiefenvorgabeeinrichtung (70) zur insbesondere kontinuierlichen Ermittlung des Tiefenvorgabewerts (TV) in Abhängigkeit von einer Relativbewegung der Werkzeugmaschine (10) und des Werkstücks (W) bezüglich der Bearbeitungsbahn (BA) ausgestaltet ist.

3. Werkzeugmaschine nach Anspruch 1 oder 2, **dadurch gekennzeichnet, dass** sie zum Führen des Arbeitswerkzeugs (15) entlang der Bearbeitungsbahn (BA) in einer Regelarbeitsrichtung (AR) vorgesehen ist.

4. Werkzeugmaschine nach Anspruch 3, **dadurch gekennzeichnet, dass** die Tiefenvorgabeeinrichtung (70) bei einer Bewegung in der Regelarbeitsrichtung (AR) zur Ausgabe eines ein Eintauchen des Arbeitswerkzeugs (15) in das Werkstück (W) indizierenden Tiefenvorgabewerts (TV), wenn die in Regelarbeitsrichtung (AR) hintere Bearbeitungskante (KB) den Bearbeitungbeginnort (BB) erreicht, und/oder zur Ausgabe eines ein Austauchen des Arbeitswerkzeugs (15) aus dem Werkstück (W) indizierenden Tiefenvorgabewerts (TV) ausgestaltet ist, wenn die in Regelarbeitsrichtung (AR) vordere Bearbeitungskante (KB, KE) den Bearbeitungsendeort (BE) erreicht, und/oder dass die Tiefenvorgabeeinrichtung (70) zur Ausgabe eines ein Austauchen des Arbeitswerkzeugs (15) aus dem Werkstück (W) indizierenden Tiefenvorgabewerts (TV) ausgestaltet ist, wenn das Arbeitswerkzeug (15) entgegen der Regelarbeitsrichtung (AR) um ein vorbestimmtes Maß bewegt wird und/oder wenn die in Regelarbeitsrichtung (AR) hintere Bearbeitungskante (KB, KE) den Bearbeitungbeginnort (BB) erreicht, und/oder dass das Arbeitswerkzeug (15) und/oder die Werkzeugaufnahme (13) bei einer Verstellung zwischen den mindestens zwei Tiefeneinstellpositionen (T1, T2, T3) eine Bewegungsbahn mit einer Richtungskomponente parallel zu der Führungsfläche (32) und einer Richtungskomponente senkrecht zu der Führungsfläche (32), insbesondere eine Kreisbahn um eine Tiefeneinstellachse (SA), durchläuft und die Tiefenvorgabeeinrichtung (70) zur Ermittlung des Tiefenvorgabewerts (TV) in Abhängigkeit von einer Verstellung der vorderen Bearbeitungskante (KE) und/oder hinteren Bearbeitungskante (KB) in Abhängigkeit von der Richtungskomponente parallel zu der Führungsfläche (32) ausgestaltet ist, wobei vorteilhaft vorgesehen ist, dass die die zu der Führungsfläche (32) parallele Richtungskomponente durch ein Verschwenken der Werkzeugaufnahme (13) um eine Tiefeneinstellachse (SA) mit einem Schwenkwinkel (α) verursacht ist.

5. Werkzeugmaschine nach einem der Ansprüche 3 oder 4, **dadurch gekennzeichnet, dass** ein Abstand zwischen der vorderen Bearbeitungskante (KE) und der hinteren Bearbeitungskante (KB) von einer Eindringtiefe des Arbeitswerkzeugs (15) in das Werkstück (W) abhängig ist und die Tiefenvorgabeeinrichtung (70) zur Ermittlung des Tiefenvorgabewerts (TV) in Abhängigkeit einer Verstellung der vorderen Bearbeitungskante (KE) und/oder hinteren Bearbeitungskante (KB) in Abhängigkeit von der Eindringtiefe des Arbeitswerkzeugs (15) ausgestaltet ist.

6. Werkzeugmaschine nach einem der vorhergehenden Ansprüche, **dadurch gekennzeichnet, dass** sie einen Wegesensor (62) zur Ermittlung einer Weglänge (WL) einer Relativbewegung der Werkzeugmaschine und des Werkstücks (W), insbesondere entlang der Bearbeitungsbahn (BA) oder zu der Bearbeitungsbahn (BA) hin, aufweist und/oder dass die Erfassungseinrichtung eine durch einen Bediener zur Erfassung der Markierung betätigbare Betätigungseinrichtung und/oder einen Markierungssensor (60) mit einem beim Betrieb der Werkzeugmaschine (10) auf das Werkstück (W) gerichteten Werkstück-Erfassungsbereich (61) zur Ermittlung der mindestens einen Werkstückreferenz (RB, RE) aufweist, wenn die Werkstückreferenz (RB, RE) an dem Werkstück (W) angebracht oder angeordnet ist oder dem Werkstück (W) zugeordnet ist.

7. Werkzeugmaschine nach einem der vorhergehenden Ansprüche, **dadurch gekennzeichnet, dass** sie mindestens einen Markierungssensor (60) mit einem beim Betrieb der Werkzeugmaschine (10) auf das Werkstück (W) gerichteten Werkstück-Erfassungsbereich (61) zur Ermittlung der mindestens einen Werkstückreferenz (RB, RE), wenn die Werkstückreferenz (RB, RE) an dem Werkstück (W) angebracht oder angeordnet ist oder dem Werkstück (W) zugeordnet ist, und mindestens einen von der Markierungssensor (60) separaten Wegesensor (62) zur Ermittlung einer Weglänge (WL) einer Relativbewegung der Werkzeugmaschine und des Werkstücks (W), insbesondere entlang der Bearbeitungsbahn (BA), nach der Ermittlung der mindestens einen Werkstückreferenz (RB, RE) aufweist.

8. Werkzeugmaschine (10) nach einem der Ansprüche 6 oder 7, **dadurch gekennzeichnet, dass** der Wegesensor (62) außerhalb des Erfassungsbereichs (61) des Markierungssensor (60) an der Werkzeugmaschine, insbesondere dem Führungselement (30), und/oder in einem Querabstand zu der Bearbeitungskante (KB, KE) angeordnet ist und/oder dass der Wegesensor (62) und der Markierungssensor (60) voneinander verschiedene physikalische Messprinzipien aufweisen.

9. Werkzeugmaschine (10) nach einem der Ansprüche 6 bis 8, **dadurch gekennzeichnet, dass** der Wegesensor (62) mindestens ein Rollglied zum Rollen entlang einer Oberfläche des Werkstücks (W) und/oder mindestens ein optisches Erfassungselement, insbesondere in der Art eines Maussensors, und/oder mindestens einen Lagesensor und/oder mindestens einen magnetischen Sensor zur Erfassung eines Erdmagnetfeldes und/oder mindestens ein Beschleunigungssensor umfasst oder dadurch gebildet ist und/oder dass der Wegesensor (62) und/oder der Markierungssensor (60) eine Kamera und/oder einen optischen Sensor und/oder einen induktiven Sensor und/oder einen durch eine Bedienhandlung eines Bedieners zur Erfassung einer virtuellen Werkstückmarkierung des Werkstücks (W) betätigbaren Sensor umfasst oder dadurch gebildet ist und/oder dass der Markierungssensor (60, 160) eine von der Werkzeugmaschine (10) separate Baueinheit bildet und unabhängig von der Werkzeugmaschine (10) bezüglich des Werkstücks (W) beweglich ist.

10. Werkzeugmaschine nach einem der vorhergehenden Ansprüche, **dadurch gekennzeichnet, dass** die Tiefenvorgabeeinrichtung (70) zur Ermittlung des Tiefenvorgabewerts (TV) in Abhängigkeit von einem Abstand der Führungsfläche (32) zu der Werkstückoberfläche (WO) ausgestaltet ist und/oder dass die Tiefenvorgabeeinrichtung (70) mindestens ein Erfassungselement zur Erfassung eines Anfangsabstandes und/oder eines Vorhandenseins einer Führungsschiene (50) zwischen der Führungsfläche (32) und der Werkstückoberfläche (WO) aufweist, wobei die Führungsschiene (50) auf die Werkstückoberfläche (WO) auflegbar ist und das Führungselement (30) auf der Führungsschiene (50) entlang der Bearbeitungsbahn (BA) führbar ist.

11. Werkzeugmaschine nach einem der vorhergehenden Ansprüche, **dadurch gekennzeichnet, dass** die Tiefeneinstelleinrichtung (20) ein Tiefeneinstelllager (21) aufweist, an dem die Werkzeugaufnahme (13) bezüglich der Führungsfläche (32) linear und/oder um eine Tiefenschwenkachse (SA) schwenkbar gelagert ist, wobei vorteilhaft vorgesehen ist, dass die Tiefenvorgabeeinrichtung (70) zur Ermittlung des Abstandswerts (DB) der Bearbeitungskante (KB, KE) zu der mindestens einen Werkstückreferenz (RB, RE) in Abhängigkeit von einer Winkelposition der Werkzeugaufnahme (13) ausgestaltet ist, um die die Werkzeugaufnahme (13) um die Tiefenschwenkachse (SA) bezüglich der Führungsfläche (32) geschwenkt ist.

12. Werkzeugmaschine nach einem der vorhergehenden Ansprüche, **dadurch gekennzeichnet, dass** die Tiefeneinstelleinrichtung (20) zur manuellen Verstellung durch einen Bediener in die mindestens eine Tiefeneinstellposition (T1, T2, T3) ausgestaltet und/oder vorgesehen ist und/oder mindestens eine Rückstellfeder zur Verstellung der Werkzeugaufnahme (13) in Richtung einer Tiefeneinstellposition (T1, T2, T3) aufweist, in der das Arbeitswerkzeug (15) nicht vor die Führungsfläche (32) vorsteht und/oder dass die Tiefeneinstelleinrichtung (20) einen Tiefensensor (44, 46) zur Ermittlung der Tiefeneinstellpositionen (T1, T2, T3) der Werkzeugaufnahme (13) bezüglich der Führungsfläche (32) aufweist, wobei vorteilhaft vorgesehen ist, dass der Tiefensensor (44, 46) einen Winkelsensor zur Erfassung einer Winkelposition der Werkzeugaufnahme (13) umfasst, um die die Werkzeugaufnahme (13) um die Tiefenschwenkachse (SA) bezüglich der Führungsfläche (32) geschwenkt ist.

13. Werkzeugmaschine nach einem der vorhergehenden Ansprüche, **dadurch gekennzeichnet, dass** die Tiefeneinstelleinrichtung (20) einen Stellmotor (22) zur Verstellung der Werkzeugaufnahme (13) in mindestens eine Tiefeneinstellposition (T1, T2, T3) und/oder eines Tiefenanschlags für die Werkzeugaufnahme (13) und/oder eine anhand eines Bremsvorgabewerts ansteuerbare Bremseinrichtung zum Abbremsen der Werkzeugaufnahme (13) in mindestens einer Tiefeneinstellposition (T1, T2, T3) aufweist, wobei vorteilhaft vorgesehen ist, dass die Werkzeugmaschine eine Steuerungseinrichtung (80) zur Ansteuerung des Stellmotors (22) in Abhängigkeit von dem Tiefenvorgabewert (TV) aufweist und/oder dass die Werkzeugmaschine eine Kopplungseinrichtung zur lösbaren Kupplung des Stellmotors (22) und/oder der Bremseinrichtung mit der Werkzeugaufnahme (13) aufweist.

14. Werkzeugmaschine nach einem der vorhergehenden Ansprüche, **dadurch gekennzeichnet, dass** sie eine, insbesondere optische und/oder akustische, Ausgabeeinrichtung (90), insbesondere ein Display zur Ausgabe des Tiefenvorgabewerts (TV) für einen Bediener der Werkzeugmaschine aufweist und/oder dass als Arbeitswerkzeug (15) ein blattförmiges Trennwerkzeug, insbesondere ein Sägeblatt, vorgesehen ist und/oder dass sie mindestens ein Bedienelement (42), insbesondere einen Totmannschalter, aufweist, welches während eines Betriebs durch einen Bediener der Werkzeugmaschine zur Aufrechterhaltung des Betriebs der Werkzeugmaschine (10) dauerhaft und/oder in vorbestimmten zeitlichen Mindestabständen zu betätigen ist, und/oder dass sie mindestens einen an dem Führungselement (30) ortsfest angebrachten Handgriff und/oder mindestens einen an der Antriebseinheit (11) ortsfest angebrachten Handgriff aufweist und/oder dass sie einen Bestandteil eines Systems bildet, welches die Werkzeugmaschine (10) sowie eine auf das Werkstück (W) auflegbare Führungsschiene (50) aufweist, wobei an der Führungsschiene (50) und dem Führungselement (30) sich entlang einer Längsachse erstreckende und in Gebrauchslage des Systems ineinander eingreifende Führungskonturen zum Führen des Führungselements (30) entlang der Bearbeitungsbahn (BA) angeordnet sind und/oder dass sie mindestens einen Sensor (47, 48) mit einem auf den Außenumfang (17) des Arbeitswerkzeugs (15) gerichteten Erfassungsbereich zur Ermittlung der vorderen Bearbeitungskante (KE) und/oder der hinteren Bearbeitungskante (KB) aufweist.

15. Verfahren zum Betreiben einer mobilen Werkzeugmaschine, nämlich einer Hand-Werkzeugmaschine (10) oder halbstationären Werkzeugmaschine, zur Bearbeitung eines Werkstücks (W), wobei die Werkzeugmaschine ein Führungselement (30) mit einer Führungsfläche (32) zum relativen Führen der Werkzeugmaschine (10) und einer Werkstückoberfläche (WO) des Werkstücks aneinander entlang einer Bearbeitungsbahn (BA), insbesondere einer Bearbeitungslinie, aufweist, wobei die Werkzeugmaschine eine Antriebseinheit (11) mit einem Antriebsmotor (12) zum Antreiben einer an der Antriebseinheit (11) angeordneten Werkzeugaufnahme (13) zur Aufnahme eines Arbeitswerkzeugs (15) aufweist, wobei die Werkzeugmaschine (10) eine Erfassungseinrichtung zur Erfassung mindestens einer Werkstückreferenz (RB, RE) aufweist, die bezüglich der Bearbeitungsbahn (BA) einem für einen Beginn der Bearbeitung des Werkstücks (W) durch das Arbeitswerkzeug (15) vorgesehenen Bearbeitungbeginnort (BB) oder einem für eine Beendigung der Bearbeitung des Werkstücks (W) durch das Arbeitswerkzeug (15) vorgesehenen Bearbeitungsendeort (BE) zugeordnet ist, wobei die Werkzeugaufnahme (13) zum Drehantreiben des Arbeitswerkzeugs (15) um eine Drehachse (D) ausgestaltet ist und zur Einstellung einer Eindringtiefe des Arbeitswerkzeugs (15) in das Werkstück anhand einer Tiefeneinstelleinrichtung (20) der Werkzeugmaschine (10) zwischen Tiefeneinstellpositionen (T1, T2, T3) verstellbar ist, wobei das Arbeitswerkzeug (15) an seinem radialen Außenumfang (17) einen Schneidbereich (18) zum Einschneiden in das Werkstück (W) unter Ausbildung einer Bearbeitungskante (KB, KE) aufweist, die in Abhängigkeit von mindestens zwei Tiefeneinstellpositionen (T1, T2, T3), bei denen das Arbeitswerkzeug (15) unterschiedlich weit vor die Führungsfläche (32) vorsteht, unterschiedliche Abstände zu der mindestens einen Werkstückreferenz (RB, RE) aufweist, **gekennzeichnet durch** Ermittlung eines Abstandswerts (DB) des Abstands der Bearbeitungskante (KB, KE) zu der mindestens einen Werkstückreferenz (RB, RE) und Ermittlung eines Tiefenvorgabewerts (TV) für die Tiefeneinstellposition (T1, T2, T3) in Abhängigkeit von dem Abstandswert.

**Claims**

1.  A mobile machine tool (10), namely, a hand-held machine tool or semi-stationary machine tool for machining a workpiece (W), wherein the machine tool (10) comprises a guide element (30) having a guide surface (32) for relatively guiding the machine tool (10) and a workpiece surface (WO) of the workpiece (W) towards one another along a machining path (BA), in particular a machining line, wherein the machine tool (10) comprises a drive unit (11) having a drive motor (12) for driving a tool receptacle (13) arranged on the drive unit (11) for receiving a work tool (15), wherein the machine tool (10) comprises a detection device for detecting at least one workpiece reference (RB, RE) which is assigned, with respect to a machining path (BA), to a machining start point (BB) where the work tool (15) is intended to start the machining of the workpiece (W) or to a machining end point (BE) where the work tool (15) is intended to end the machining of the workpiece (W), wherein the tool receptacle (13) is designed for rotationally driving the work tool (15) about an axis of rotation (D) and for adjusting the penetration depth of the work tool (15) into the workpiece (W) by means of a depth adjustment device (20) of the machine tool (10) between depth adjustment positions (T1, T2, T3), wherein the work tool (15) has, on its radially outer circumference (17), a cutting region (18) for cutting into the workpiece (W), thereby forming a machining edge (KB, KE) which is at different distances from the at least one workpiece reference (RB, RE) depending on at least two depth adjusting positions (T1, T2, T3) in which the work tool (15) projects at different distances from the guide surface (32), **characterized in that in that** the machine tool (10) comprises a depth adjustment device (70) for determining a distance value (DB) of the distance of the machining edge (KB, KE) from the at least one workpiece reference (RB, RE) and for determining a predetermined depth value (TV) for the depth adjustment position (T1, T2, T3) depending on the distance value (DB).

2.  The machine tool (10) according to claim 1, **characterized in that** the depth adjustment device (70) is designed for continuously determining the predetermined depth value (TV) depending on a relative movement of the machine tool (10) and the workpiece (W) with respect to the machining path (BA).

3.  The machine tool according to claim 1 or 2, **characterized in that** it is intended for guiding the work tool (15) along the machining path (BA) in a regular working direction (AR).

4.  The machine tool according to claim 3, **characterized in that** the depth adjustment device (70) is designed to output a predetermined depth value (TV) indicating plunging of the work tool (15) into the workpiece (W) for movement in the regular working direction (AR) when the rear machining edge (KB), viewed in the regular working direction (AR), reaches the machining start point (BB) and/or is designed for outputting a predetermined depth value (TV) indicating the work tool (15) retracting from the workpiece (W) when the front machining edge (KB, KE), viewed in the regular working direction (AR), reaches the machining end point (BE), and/or **in that** the depth adjustment device (70) is designed for outputting a predetermined depth value (TV) indicating retraction of the work tool (15) from the workpiece (W) if the work tool (15) is moved by a predetermined measure against the regular working direction (AR) and/or if the rear machining edge (KB, KE), viewed in the regular working direction (AR), reaches the machining start point (BB), and/or **in that** the work tool (15) and/or the tool receptacle (13) when moving between the at least two depth adjustment positions (T1, T2, T3) passes through a motion path having a directional component parallel to the guide surface (32) and a directional component orthogonal to the guide surface (32), in particular a circular path about a depth adjustment axis (SA) and the depth adjustment device (70) is designed for determining the predetermined depth value (TV) depending on an adjustment of the front machining edge (KE) and/or rear machining edge (KB) depending on the directional component parallel to the guide surface (32), wherein it is advantageously provided, that the directional component parallel to the guide surface (32) is caused by pivoting the tool receptacle (13) about a depth adjustment axis (SA) at a pivot angle ($\alpha$).

5.  The machine tool according to any one of claims 3 or 4, **characterized in that** a distance between the front machining edge (KE) and the rear machining edge (KB) is dependent on a penetration depth of the work tool (15) into the workpiece (W) and the depth adjustment device (70) is designed for determining the predetermined depth value (TV) depending on an adjustment of the front machining edge (KE) and/or the rear machining edge (KB) depending on the penetration depth of the work tool (15).

6.  The machine tool according to any one of the preceding claims, **characterized in that** the machine tool has a travel sensor (62) for determining a path length (WL) of a relative movement of the machine tool and the workpiece (W), in particular along the machining path (BA) or towards the machining path (BA), and/or **in that** the detection device is an actuating device operable by an operator for detecting the marking and/or comprises a marking sensor (60) having a workpiece detection range (61) directed at the workpiece (W) when the machine tool (10) is in operation for determining the at least one workpiece reference (RB, RE) if the workpiece reference (RB, RE) is attached to, or arranged at, or assigned to, the workpiece (W).

7. The machine tool according to any one of the preceding claims, **characterized in that** the machine tool has at least one marking sensor (60) having a workpiece detection range (61) which is directed at the workpiece (W) when the machine tool (10) is in operation to determine the at least one workpiece reference (RB, RE) if the workpiece reference (RB, RE) is attached to, or arranged on, or assigned to, the workpiece (W), and has at least one travel sensor (62) separate from the marking sensor (60) to determine a path length (WL) of a relative movement of the machine tool and the workpiece (W), in particular along the machining path (BA), after determining the at least one workpiece reference (RB,RE).

8. The machine tool (10) according to any one of claims 6 or 7, **characterized in that** the travel sensor (62) is arranged outside the detection range (61) of the marking sensor (60) on the machine tool, in particular the guide element (30), and/or is arranged at a transverse distance from the machining edge (KB, KE) and/or **in that** the travel sensor (62) and the marking sensor (60) have physical measuring principles that differ from one another.

9. The machine tool (10) according to any one of claims 6 to 8, **characterized in that** the travel sensor (62) can comprise or be formed by at least one rolling member for rolling along a surface of the workpiece (W) and/or at least one optical detection element, in particular of the type of a mouse sensor, and/or at least one position sensor and/or at least one magnetic sensor for detecting a geomagnetic field and/or at least one acceleration sensor, and/or **in that** the travel sensor (62) and/or the marking sensor (60) comprises, or is formed by, a camera and/or an optical sensor and/or an inductive sensor and/or a sensor operable by an actuating action of an operator for determining a virtual workpiece marking of the workpiece (W), and/or **in that** the marking sensor (60, 160) forms an assembly separate from the machine tool (10) and can be moved relative to the workpiece (W) irrespective of the machine tool (10).

10. The machine tool according to any one of the preceding claims, **characterized in that** the depth adjustment device (70) is designed for determining the predetermined depth value (TV) depending on a distance of the guide surface (32) from the workpiece surface (WO), and/or **in that** the depth adjustment device (70) comprises at least one detection element for detecting an initial distance and/or a presence of a guide rail (50) between the guide surface (32) and the workpiece surface (WO), wherein the guide rail (50) can be placed onto the workpiece surface (WO) and the guide element (30) can be guided on the guide rail (50) along the machining path (BA).

11. The machine tool according to any one of the preceding claims, **characterized in that** the depth adjustment device (20) has a depth adjustment bearing (21) on which the tool receptacle (13) is linearly mounted with respect to the guide surface (32) and/or is mounted for pivoting about a depth pivot axis (SA), wherein it is advantageously provided, that the depth adjustment device (70) is designed for determining the distance value (DB) of the machining edge (KB, KE) from the at least one workpiece reference (RB, RE) depending on an angular position of the tool receptacle (13) by which the tool receptacle (13) is pivoted relative to the guide surface (32) about the depth pivot axis (SA).

12. The machine tool according to any one of the preceding claims, **characterized in that** the depth adjustment device (20) is designed and/or intended for manual adjustment by an operator into the at least one depth adjustment position (T1, T2, T3) and/or comprises at least one return spring for adjusting the tool receptacle (13) in the direction of a depth adjustment position (T1, T2, T3) at which the work tool (15) does not project from the guide surface (32), and/or **in that** the depth adjustment device (20) comprises a depth sensor (44, 46) for determining the depth adjustment positions (T1, T2, T3) of the tool receptacle (13) relative to the guide surface (32), wherein it is advantageously provided, that the depth sensor (44, 46) comprises an angle sensor for detecting an angular position of the tool receptacle (13) by which the tool receptacle (13) is pivoted relative to the guide surface (32) about the depth pivot axis (SA).

13. The machine tool according to any one of the preceding claims, **characterized in that** the depth adjustment device (20) comprises a servomotor (22) for adjusting the tool receptacle (13) into at least one depth adjustment position (T1, T2, T3) and/or a depth stop for the tool receptacle (13) and/or a braking means for braking the tool receptacle (13) in at least one depth adjustment position (T1, T2, T3) which can be actuated based on a predetermined braking value, wherein it is advantageously provided, that the machine tool has a control device (80) for controlling the servomotor (22) as a function of the predetermined depth value (TV) and/or that the machine tool has a coupling means for detachably coupling the servomotor (22) and/or the braking means to the tool receptacle (13).

14. The machine tool according to any one of the preceding claims, **characterized in that** the machine tool preferably has an output device (90), in particular an optical and/or acoustic one, in particular a display for outputting the predetermined depth value (TV) for an operator of the machine tool, and/or **in that** a blade-shaped cutting tool, in particular a saw blade, is provided as the work tool (15), and/or **in that** the machine tool has at least one control element (42), in particular a dead man switch, which must permanently and/or at predetermined time intervals during operation be actuated by an operator of the machine tool to maintain operation of the machine tool (10), and/or **in that** the machine tool has at least one handle that is fixedly attached to the guide element (30) and/or at least one handle that is fixedly attached to the drive unit (11), and/or **in that** the machine tool forms part of a system comprising the machine tool (10) and a guide rail (50) that can be placed onto the workpiece (W), wherein guide contours extending along a longitudinal axis on the guide rail (50) and the guide element (30) and engaging in one another in the use position of the system are arranged for guiding the guide element (30) along the machining path (BA), and/or **in that** it has at least one sensor (47, 48) with a detection range directed at the outer circumference (17) of the work tool (15) for determining the front machining edge (KE) and/or the rear machining edge (KB).

15. A method for operating a mobile machine tool (10), namely, a hand-held machine tool or semi-stationary machine tool for machining a workpiece (W), wherein the machine tool comprises a guide element (30) having a guide surface (32) for relatively guiding the machine tool (10) and a workpiece surface (WO) of the workpiece towards one another along a machining path (BA), in particular a machining line, wherein the machine tool comprises a drive unit (11) having a drive motor (12) for driving a tool receptacle (13) arranged on the drive unit (11) for receiving a work tool (15), wherein the machine tool (10) comprises a detection device for detecting at least one workpiece reference (RB, RE) which is assigned, with respect to a machining path (BA), to a machining start point (BB) where the work tool (15) is intended to start the machining of the workpiece (W) or to a machining end point (BE) where the work tool (15) is intended to end the machining of the workpiece (W), wherein the tool receptacle (13) is designed for rotationally driving the work tool (15) about an axis of rotation (D) and for adjusting the penetration depth of the work tool (15) into the workpiece by means of a depth adjustment device (20) of the machine tool (10) between depth adjustment positions (T1, T2, T3), wherein the work tool (15) has, on its radially outer circumference (17), a cutting region (18) for cutting into the workpiece (W), thereby forming a machining edge (KB, KE) which is at different distances from the at least one workpiece reference (RB, RE) depending on at least two depth adjusting positions (T1, T2, T3) in which the work tool (15) projects at different distances from the guide surface (32), **characterized by** determining a distance value (DB) of the distance of the machining edge (KB, KE) from the at least one workpiece reference (RB, RE) and determining a predetermined depth value (TV) for the depth adjustment position (T1, T2, T3) depending on the distance value.

## Revendications

1. Machine-outil mobile (10), à savoir machine-outil manuelle ou machine-outil semi-stationnaire, destinée à usiner une pièce (W), dans laquelle la machine-outil (10) présente un élément de guidage (30) avec une surface de guidage (32) destinée à guider de manière relative la machine-outil (10) et une surface de pièce (WO) de la pièce (W) l'une sur l'autre le long d'une voie d'usinage (BA), en particulier d'une ligne d'usinage, dans laquelle la machine-outil (10) présente une unité d'entraînement (11) avec un moteur d'entraînement (12) destiné à entraîner un logement d'outil (13) disposé sur l'unité d'entraînement (11), destiné à loger un outil de travail (15), dans laquelle la machine-outil (10) présente un dispositif de détection pour détecter au moins une référence de pièce (RB, RE), qui est associée par rapport à la voie d'usinage (BA) à un emplacement de début d'usinage (BB) prévu pour un début de l'usinage de la pièce (W) par l'outil de travail (15) ou à un emplacement de fin d'usinage (BE) prévu pour une fin de l'usinage de la pièce (W) par l'outil d'usinage (15), dans laquelle le logement d'outil (13) est configuré pour entraîner en rotation l'outil de travail (15) autour d'un axe de rotation (D) et peut être ajusté entre des positions de réglage de profondeur (T1, T2, T3) pour régler une profondeur de pénétration de l'outil de travail (15) dans la pièce (W) à l'aide d'un dispositif de réglage de profondeur (20) de la machine-outil (10), dans laquelle l'outil de travail (15) présente sur sa périphérie extérieure radiale (17) une zone de découpe (18) destinée à inciser la pièce (W) en réalisant une arête d'usinage (KB, KE), qui présente différentes distances par rapport à l'au moins une référence de pièce (RB, RE) en fonction d'au moins deux positions de réglage de profondeur (T1, T2, T3), pour lesquelles l'outil de travail (15) fait saillie avec un éloignement variable devant la surface de guidage (32), **caractérisée en ce que** la machine-outil (10) présente un dispositif de spécification de profondeur (70) destiné à déterminer une valeur de distance (DB) de la distance de l'arête d'usinage (KB, KE) par rapport à l'au moins une référence de pièce (RB, RE) et destiné à déterminer la valeur de spécification de profondeur (TV) pour la position de réglage de profondeur (T1, T2, T3) en fonction de la valeur de distance (DB).

2. Machine-outil (10) selon la revendication 1, **caractérisée en ce que** le dispositif de spécification de profondeur (70) est configuré pour déterminer en particulier de manière continue la valeur de spécification de profondeur (TV) en fonction d'un déplacement relatif de la machine-outil (10) et de la pièce (W) par rapport à la voie d'usinage (BA).

3. Machine-outil selon la revendication 1 ou 2, **caractérisée en ce qu'**elle est prévue pour guider l'outil de travail (15) le long de la voie d'usinage (BA) dans une direction de travail de réglage (AR).

4. Machine-outil selon la revendication 3, **caractérisée en ce que** le dispositif de spécification de profondeur (70) est configuré pour, lors d'un déplacement dans la direction de travail de réglage (AR), délivrer une valeur de spécification de profondeur (TV) indiquant un enfoncement de l'outil de travail (15) dans la pièce (W) lorsque l'arête d'usinage (KB) arrière dans la direction de travail de réglage (AR) atteint l'emplacement de début d'usinage (BB), et/ou pour délivrer une valeur de spécification de profondeur (TV) indiquant une sortie de l'outil de travail (15) hors de la pièce (W) lorsque l'arête d'usinage (KB, KE) avant dans la direction de travail de réglage (AR) atteint l'emplacement de fin d'usinage (BE), et/ou que le dispositif de spécification de profondeur (70) est configuré pour délivrer une valeur de spécification de profondeur (TV) indiquant une sortie de l'outil de travail (15) hors de la pièce (W) lorsque l'outil de travail (15) est déplacé dans le sens contraire à la direction de travail de réglage (AR) d'une mesure prédéfinie et/ou lorsque l'arête d'usinage (KB, KE) arrière dans la direction de travail de réglage (AR) atteint l'emplacement de début d'usinage (BB), et/ou que l'outil de travail (15) et/ou le logement d'outil (13) traversent, lors d'un ajustement entre les deux moins deux positions de réglage de profondeur (T1, T2, T3), une voie de déplacement avec une composante directionnelle de manière parallèle à la surface de guidage (32) et avec une composante directionnelle de manière perpendiculaire à la surface de guidage (32), en particulier une voie circulaire autour d'un axe de réglage de profondeur (SA) et le dispositif de spécification de profondeur (70) est configuré pour déterminer la valeur de spécification de profondeur (TV) en fonction d'un ajustement de l'arête d'usinage avant (KE) et/ou de l'arête d'usinage arrière (KB) en fonction de la composante directionnelle de manière parallèle à la surface de guidage (32), dans laquelle il est avantageusement prévu que la composante directionnelle parallèle à la surface de guidage (32) est provoquée par un pivotement du logement d'outil (13) autour d'un axe de réglage de profondeur (SA) avec un angle de pivotement ($\alpha$).

5. Machine-outil selon l'une quelconque des revendications 3 ou 4, **caractérisée en ce qu'**une distance entre l'arête d'usinage avant (KE) et l'arête d'usinage arrière (KB) dépend d'une profondeur de pénétration de l'outil de travail (15) dans la pièce (W) et le dispositif de spécification de profondeur (70) est configuré pour déterminer la valeur de spécification de profondeur (TV) en fonction d'un ajustement de l'arête d'usinage avant (KE) et/ou de l'arête d'usinage arrière (KB) en fonction de la profondeur de pénétration de l'outil de travail (15).

6. Machine-outil selon l'une quelconque des revendications précédentes, **caractérisée en ce qu'**elle présente un capteur de course (62) destiné à déterminer une longueur de course (WL) d'un déplacement relatif de la machine-outil et e la pièce (W), en particulier le long de la voie d'usinage (BA) ou vers la voie d'usinage (BA), et/ou que le dispositif de détection présente un dispositif d'actionnement pouvant être actionné par un utilisateur pour détecter le marquage et/ou un capteur de marquage (60) avec une zone de détection de pièce (61) dirigée sur la pièce (W) lors du fonctionnement de la machine-outil (10), destinée à déterminer l'au moins une référence de pièce (RB, RE) lorsque la référence de pièce (RB, RE) est installée ou disposée sur la pièce (W) ou est associée à la pièce (W).

7. Machine-outil selon l'une quelconque des revendications précédentes, **caractérisée en ce qu'**elle présente au moins un capteur de marquage (60) avec une zone de détection de pièce (61) dirigée sur la pièce (W) lors du fonctionnement de la machine-outil (10), destinée à déterminer l'au moins une référence de pièce (RB, RE) lorsque la référence de pièce (RB, RE) est installée ou disposée sur la pièce (W) ou est associée à la pièce (W), et au moins un capteur de cours (62) séparé du capteur de marquage (60), destiné à déterminer une longueur de course (WL) d'un déplacement relatif de la machine-outil et de la pièce (W), en particulier le long de la voie d'usinage (BA) après la détermination de l'au moins une référence de pièce (RB, RE).

8. Machine-outil (10) selon l'une quelconque des revendications 6 ou 7, **caractérisée en ce que** le capteur de course (62) est disposé à l'extérieur de la zone de détection (61) du capteur de marquage (60) sur la machine-outil, en particulier l'élément de guidage (30), et/ou à une distance transversale par rapport à l'arête d'usinage (KB, KE), et/ou que le capteur de course (62) et le capteur de marquage (60) présentent des principes de mesure physiques différents les uns des autres.

9. Machine-outil (10) selon l'une quelconque des revendications 6 à 8, **caractérisée en ce que** le capteur de course (62) comprend au moins un organe roulant destiné à rouler le long d'une surface de la pièce (W) et/ou au moins un élément de détection optique, en particulier à la manière d'un capteur de souris, et/ou au moins un capteur de position et/ou au moins un capteur magnétique destiné à détecter un champ magnétique terrestre et/ou au moins un capteur d'accélération ou en est formé, et/ou que le capteur de course (62) et/ou le capteur de marquage (60) comprennent une caméra et/ou un capteur optique et/ou un capteur inductif et/ou un capteur pouvant être actionné par une opération de commande d'un utilisateur pour détecter un marquage virtuel de pièce de la pièce (W) ou en sont formés, et/ou que le capteur de marquage (60, 160) forme une unité modulaire séparée de la machine-outil (10) et est mobile indépendamment de la machine-outil (10) par rapport à la pièce (W).

10. Machine-outil selon l'une quelconque des revendications précédentes, **caractérisée en ce que** le dispositif de spécification de profondeur (70) est configuré pour déterminer la valeur de spécification de profondeur (TV) en fonction d'une distance de la surface de guidage (32) par rapport à la surface de pièce (WO), et/ou que le dispositif de spécification de profondeur (70) présente au moins un élément de détection destiné à détecter une distance initiale et/ou une présence d'un rail de guidage (50) entre la surface de guidage (32) et la surface de pièce (WO), dans laquelle le rail de guidage (50) peut être posé sur la surface de pièce (WO) et l'élément de guidage (30) peut être guidé sur le rail de guidage (50) le long de la voie d'usinage (BA).

11. Machine-outil selon l'une quelconque des revendications précédentes, **caractérisée en ce que** le dispositif de réglage de profondeur (20) présente un palier de réglage de profondeur (21), sur lequel le logement d'outil (13) est monté de manière linéaire par rapport à la surface de guidage (32) et/ou de manière à pouvoir pivoter autour d'un axe de pivotement de profondeur (SA), dans laquelle il est avantageusement prévu que le dispositif de spécification de profondeur (70) est configuré pour déterminer la valeur de distance (DB) de l'arête d'usinage (KB, KE) par rapport à l'au moins une référence de pièce (RB, RE) en fonction d'une position angulaire du logement d'outil (13), autour de laquelle le logement d'outil (13) est pivoté autour de l'axe de pivotement de profondeur (SA) par rapport à la surface de guidage (32).

12. Machine-outil selon l'une quelconque des revendications précédentes, **caractérisée en ce que** le dispositif de réglage de profondeur (20) est configuré et/ou est prévu pour être ajusté manuellement par un utilisateur dans l'au moins une position de réglage de profondeur (T1, T2, T3) et/ou présente au moins un ressort de rappel destiné à ajuster le logement d'outil (13) en direction d'une position de réglage de profondeur (T1, T2, T3), dans laquelle l'outil de travail (15) ne fait pas saillie devant la surface de guidage (32), et/ou que le dispositif de réglage de profondeur (20) présente un capteur de profondeur (44, 46) destiné à déterminer les positions de réglage de profondeur (T1, T2, T3) du logement d'outil (13) par rapport à la surface de guidage (32), dans laquelle il est avantageusement prévu que le capteur de profondeur (44, 46) comprend un capteur d'angle destiné à détecter une position angulaire du logement d'outil (13), autour de laquelle le logement d'outil (13) est pivoté autour de l'axe de pivotement de profondeur (SA) par rapport à la surface de guidage (32).

13. Machine-outil selon l'une quelconque des revendications précédentes, **caractérisée en ce que** le dispositif de réglage de profondeur (20) présente un moteur de réglage (22) destiné à ajuster le logement d'outil (13) dans au moins une position de réglage de profondeur (T1, T2, T3) et/ou une butée de profondeur pour le logement d'outil (13) et/ou un dispositif de freinage pouvant être piloté à l'aide d'une valeur de spécification de freinage, destiné à ralentir le logement d'outil (13) dans au moins une position de réglage de profondeur (T1, T2, T3), dans laquelle il est avantageusement prévu que la machine-outil présente un dispositif de commande (80) destiné à piloter le moteur de réglage (22) en fonction de la valeur de spécification de profondeur (TV), et/ou que la machine-outil présente un dispositif de couplage destiné à coupler de manière amovible le moteur de réglage (22) et/ou le dispositif de freinage avec le logement d'outil (13).

14. Machine-outil selon l'une quelconque des revendications précédentes, **caractérisée en ce qu'**elle présente un dispositif de délivrance (90), en particulier optique et/ou acoustique, en particulier un écran destiné à délivrer la valeur de spécification de valeur (TV) pour un utilisateur de la machine-outil, et/ou qu'un outil de séparation en forme de lame, en particulier une lame de scie, est prévu en tant qu'outil de travail (15), et/ou qu'elle présente au moins un élément d'utilisation (42), en particulier un interrupteur d'homme mort, lequel est à actionner durablement et/ou à des intervalles de temps minimaux prédéfinis au cours d'un fonctionnement par un utilisateur de la machine-outil pour maintenir le fonctionnement de la machine-outil (10), et/ou qu'elle présente au moins une poignée installée de manière stationnaire sur l'élément de guidage (30) et/ou au moins une poignée installée de manière stationnaire sur l'unité d'entraînement (11), et/ou qu'elle fait partie intégrante d'un système, lequel présente la machine-outil (10) ainsi qu'un rail de guidage (50) pouvant être placé sur la pièce (W), dans laquelle des contours de guidage s'étendant le long d'un axe longitudinal et s'imbriquant les uns dans les autres en position d'utilisation du système, destinés à guider l'élément de guidage (30) le long de la voie d'usinage (BA) sont disposés sur le rail de guidage (50) et l'élément de guidage (30), et/ou qu'elle présente au moins un capteur (47, 48) avec une zone de détection dirigée sur la périphérie extérieure (17) de l'outil de travail (15), destinée à déterminer l'arête d'usinage avant (KE) et/ou l'arête d'usinage arrière (KB).

15. Procédé pour faire fonctionner une machine-outil mobile, à savoir une machine-outil manuelle (10) ou une machine-outil semi-stationnaire, pour usiner une pièce (W), ans lequel la machine-outil présente un élément de guidage (30) avec une surface de guidage (32) pour guider de manière relative la machine-outil (10) et une surface de pièce (WO) de la pièce l'une sur l'autre le long d'une voie d'usinage (BA), en particulier d'une ligne d'usinage, dans lequel la machine-outil présente une unité d'entraînement (11) avec un moteur d'entraînement (12) pour entraîner un logement d'outil (13) disposé sur l'unité d'entraînement (11), destiné à loger un outil de travail (15), dans lequel la machine-outil (10) présente un dispositif de détection destiné à détecter au moins une référence de pièce (RB, RE), qui est associée, par rapport à la voie d'usinage (BA), à un emplacement de début d'usinage (BB) prévu pour un début de l'usinage de la pièce (W) par l'outil de travail (15) ou à un emplacement de fin d'usinage (BE) prévu pour une fin de l'usinage de la pièce (W) par l'outil de travail (15), dans lequel le logement d'outil (13) est configuré pour entraîner en rotation l'outil de travail (15) autour d'un axe de rotation (D) et peut être ajusté pour régler une profondeur de pénétration de l'outil de travail (15) dans la pièce à l'aide d'un dispositif de réglage de profondeur (20) de la machine-outil (10) entre des positions de réglage de profondeur (T1, T2, T3), dans lequel l'outil de travail (15) présente sur sa périphérie extérieure radiale (17) une zone de découpe (18) destinée à inciser la pièce (W) en réalisant une arête d'usinage (KB, KE), qui présente en fonction d'au moins deux positions de réglage de profondeur (T1, T2, T3), pour lesquelles l'outil de travail (15) fait saillie avec un éloignement variable devant la surface de guidage (32), des distances différentes par rapport à l'au moins une référence de pièce (RB, RE), **caractérisé par** la détermination d'une valeur de distance (DB) de la distance de l'arête d'usinage (KB, KE) par rapport à l'au moins une référence de pièce (Rb, RE) et la détermination d'une valeur de spécification de profondeur (TV) pour la position de réglage de profondeur (T1, T2, T3) en fonction de la valeur de distance.

**Fig. 1**

**Fig. 2**

11

T1

10

30

AR

32  T11  15  T12

BB  X11  X12

**Fig. 3**

11

T2

30

15  32

**Fig. 4**

11

T3

30

32

15

**Fig. 5**

**Fig. 6**

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013217290 A1
- DE 102017129814